# EUROPEAN PATENT APPLICATION

(11) **EP 4 072 076 A1**
(43) Date of publication of application: **12.10.2022**
(21) Application number: 20913241.4
(22) Date of filing: 07.10.2020
(51) Int. Cl.: H04L 12/46, H04L 29/12

(54) **DATA TRANSMISSION METHOD, AND RELATED APPARATUS AND SYSTEM**

(30) Priority: 17.01.2020 CN 202010055566; 28.06.2020 CN 202010599802
(71) Applicant: Huawei Technologies Co., Ltd., Shenzhen, Guangdong 518129, (CN)
(72) Inventor: DAHU, Bayaer, Shenzhen, Guangdong 518129 (CN); LIU, Guodong, Shenzhen, Guangdong 518129 (CN); YIN, Yuanbin, Shenzhen, Guangdong 518129 (CN)
(74) Representative: Pfenning, Meinig & Partner mbB
(86) International application number: PCT/CN2020/119854
(87) International publication number: WO 2021/143214

(57) **Abstract**

This application provides a data transmission method, a related device, and a system. According to the method, a data distribution point obtains a first correspondence between a first virtual extensible local area network identifier VXLAN ID and an address of a first terminal; receives a first VXLAN packet based on a tunnel of a first VXLAN, where the first VXLAN packet includes the first VXLAN ID and first data; determines the address of the first terminal based on the first VXLAN ID carried in the first VXLAN packet and the first correspondence; and sends the first data to the first terminal based on the address of the first terminal. A conventional multicast technology with relatively high costs may be replaced with technical solutions provided in this application in some scenarios.

## Description

This application claims priority to Chinese Patent Application No. CN 202010599802.4, filed with the China National Intellectual Property Administration on June 28, 2020 and entitled "DATA TRANSMISSION METHOD, RELATED DEVICE, AND SYSTEM", and claims priority to Chinese Patent Application No. CN 202010055566.X, filed with the China National Intellectual Property Administration on January 17, 2020 and entitled "DATA TRANSMISSION METHOD AND APPARATUS", which are incorporated herein by reference in their entireties.

### TECHNICAL FIELD

The present invention relates to the communication field, and in particular, to a data transmission method, a related device, and a system.

### BACKGROUND

In an existing network technology, if a plurality of users need to obtain same data from a server, a multicast technology may be deployed between the server and the users. The multicast technology is complex and has high maintenance costs. In some network scenarios, a plurality of users occasionally need to obtain same data from a server. In the scenarios, if the multicast technology is used to provide the data for the plurality of users, costs are high.

### SUMMARY

An objective of embodiments of this application is to provide a data transmission method, a related device, and a system.

According to a first aspect of this application, a data transmission method is provided. The method includes: A data distribution point obtains a first correspondence between a first virtual extensible local area network identifier VXLAN ID and an address of a first terminal, where the first VXLAN ID identifies a first VLXAN. The data distribution point receives a first VXLAN packet based on a tunnel of the first VXLAN, where the first VXLAN packet includes the first VXLAN ID and first data. The data distribution point determines the address of the first terminal based on the first VXLAN ID carried in the first VXLAN packet and the first correspondence. The data distribution point sends the first data to the first terminal based on the address of the first terminal.

In a possible implementation of the first aspect, the method further includes: The data distribution point obtains a second correspondence between the first VXLAN ID and an address of a second terminal. The data distribution point determines the address of the second terminal based on the first VXLAN ID carried in the first VXLAN packet and the second correspondence. The data distribution point sends the first data to the second terminal based on the address of the second terminal.

In a possible implementation of the first aspect, the method further includes: The data distribution point obtains a third correspondence between a second VXLAN ID and an address of a third terminal, where the second VXLAN ID identifies a second VLXAN. The data distribution point receives a second VXLAN packet based on a tunnel of the second VXLAN, where the second VXLAN packet includes the second VXLAN ID and second data. The data distribution point determines the address of the third terminal based on the second VXLAN ID carried in the second VXLAN packet and the second correspondence. The data distribution point sends the second data to the third terminal based on the address of the third terminal, where the first data and the second data belong to two different data sources, and the third terminal and the first terminal are a same terminal or different terminals.

In a possible implementation of the first aspect, that a data distribution point obtains a first correspondence includes: The data distribution point receives a request for requesting to obtain the first data, where the request carries the address of the first terminal. The data distribution point stores a correspondence between the address of the first terminal and the first data. The data distribution point receives a correspondence between the first VXLAN ID and the first data. The data distribution point generates the first correspondence based on the correspondence between the first VXLAN ID and the first data and the correspondence between the address of the first terminal and the first data.

In a possible implementation of the first aspect, the data distribution point receives the first correspondence from a controller or a server.

In a possible implementation of the first aspect, the method further includes: The data distribution point receives VXLAN configuration information used to establish the tunnel of the first VXLAN. The data distribution point establishes the tunnel of the first VXLAN with an aggregation device based on the VXLAN configuration information.

In a possible implementation of the first aspect, the address of the first terminal is an internet protocol IP address or a media access control MAC address of the first terminal.

In a possible implementation of the first aspect, that the data distribution point sends the first data to the first terminal based on the address of the first terminal includes: The data distribution point sends a unicast IP packet that carries the first data to the first terminal. Alternatively, the data distribution point sends a unicast VXLAN packet that carries the first data to the first terminal.

According to a second aspect of this application, a network configuration method is provided. The method includes: A first network device obtains a correspondence between a first virtual extensible local area network identifier VXLAN ID and information related to first data, where the first VXLAN ID identifies a first VLXAN. The first network device sends the correspondence to a second network device.

In a possible implementation of the second aspect, the information related to the first data includes an identifier of the first data and/or an address of a terminal that requests to obtain the first data.

In a possible implementation of the second aspect, the method further includes: The first network device receives a request for obtaining the first data, and the first request carries an address of a first terminal. That a first network device obtains a correspondence includes: The first network device generates the correspondence based on the request, where the correspondence includes a correspondence between the first VXLAN ID and the address of the first terminal.

In a possible implementation of the second aspect, the first network device is a server, and the second network device is a controller. Alternatively, the first network device is a controller, and the second network device is a data distribution point.

In a possible implementation of the second aspect, that a first network device obtains a correspondence includes: receiving the correspondence from a third network device.

In a possible implementation of the second aspect, the first network device is a controller, the second network device is the first data distribution point, and the third network device is a server.

In a possible implementation of the second aspect, the method further includes: The first network device sends, to an aggregation device and the data distribution point, VXLAN configuration information used to establish a tunnel of the first VXLAN.

In a possible implementation of the second aspect, the method further includes: The first network device sends an identifier of the data distribution point to the second network device.

According to the third aspect of this application, a data distribution point is provided. The data distribution point includes: an obtaining unit, configured to obtain a first correspondence between a first virtual extensible local area network identifier VXLAN ID and an address of a first terminal, where the first VXLAN ID identifies a first VLXAN; a receiving unit, configured to receive a first VXLAN packet based on a tunnel of the first VXLAN, where the first VXLAN packet includes the first VXLAN ID and first data; a determining unit, configured to determine the address of the first terminal based on the first VXLAN ID carried in the first VXLAN packet and the first correspondence; and a sending unit, configured to send the first data to the first terminal based on the address of the first terminal.

In a possible implementation of the third aspect, the obtaining unit is further configured to obtain a second correspondence between the first VXLAN ID and an address of a second terminal. The determining unit is further configured to determine the address of the second terminal based on the first VXLAN ID carried in the first VXLAN packet and the second correspondence. The data distribution point sends the first data to the second terminal based on the address of the second terminal.

In a possible implementation of the third aspect, the obtaining unit is further configured to obtain a third correspondence between a second VXLAN ID and an address of a third terminal, where the second VXLAN ID identifies a second VLXAN. The receiving unit is further configured to receive a second VXLAN packet based on a tunnel of the second VXLAN, where the second VXLAN packet includes the second VXLAN ID and second data. The determining unit is further configured to determine the address of the third terminal based on the second VXLAN ID carried in the second VXLAN packet and the second correspondence. The sending unit is further configured to send the second data to the third terminal based on the address of the third terminal, where the first data and the second data belong to two different data sources, and the third terminal and the first terminal are a same terminal or different terminals.

In a possible implementation of the third aspect, the receiving unit is configured to: receive a request for requesting to obtain the first data, where the request carries the address of the first terminal; store a correspondence between the address of the first terminal and the first data; and receive a correspondence between the first VXLAN ID and the first data. The obtaining unit is configured to generate the first correspondence based on the correspondence between the first VXLAN ID and the first data and the correspondence between the address of the first terminal and the first data.

In a possible implementation of the third aspect, the receiving unit receives the first correspondence from a controller or a server.

In a possible implementation of the third aspect, the receiving unit is configured to receive VXLAN configuration information used to establish the tunnel of the first VXLAN. The data distribution point further includes an establishment unit, and the establishment unit is configured to establish the tunnel of the first VXLAN with an aggregation device based on the VXLAN configuration information.

In a possible implementation of the third aspect, the address of the first terminal is an internet protocol IP address of the first terminal or a media access control MAC address of the first terminal.

In a possible implementation of the third aspect, the sending unit is configured to: send a unicast IP packet that carries the first data to the first terminal; or send a unicast VXLAN packet that carries the first data to the first terminal.

According to the fourth aspect of this application, a first network device is provided. The first network device includes: an obtaining unit, configured to obtain a correspondence between a first virtual extensible local area network identifier VXLAN ID and information related to first data, where the first VXLAN ID identifies a first VLXAN; and a sending unit, configured to send the correspondence to a second network device.

In a possible implementation of the fourth aspect, the information related to the data includes an identifier of the first data and/or an address of a terminal that requests to obtain the first data.

In a possible implementation of the fourth aspect, the first network device includes a receiving unit, where the receiving unit is configured to receive a request for obtaining the first data, and the request carries an address of a first terminal. The obtaining unit is configured to generate the correspondence based on the request, where the correspondence includes a correspondence between the first VXLAN ID and the address of the first terminal.

In a possible implementation of the fourth aspect, the first network device is a server, and the second network device is a controller. Alternatively, the first network device is a controller, and the second network device is a data distribution point.

In a possible implementation of the fourth aspect, the obtaining unit is configured to receive the correspondence from a third network device.

In a possible implementation of the fourth aspect, the first network device is a controller, the second network device is a data distribution point, and the third network device is a server.

In a possible implementation of the fourth aspect, the sending unit is configured to send, to an aggregation device and the data distribution point, VXLAN configuration information used to establish a tunnel of the first VXLAN.

In a possible implementation of the fourth aspect, the sending unit is further configured to send an identifier of the data distribution point to the second network device.

According to a fifth aspect of this application, a network system is provided. The network system includes the data distribution point in the third aspect and the plurality of possible implementations of the third aspect and the first network device in the fourth aspect and the plurality of possible implementations of the fourth aspect.

An advantage of one or more aspects of this application is: A correspondence between a VXLAN ID of a VXLAN used to receive data and one or more addresses of one or more data receivers is directly or indirectly configured on a data distribution point, so that the data distribution point can send data received by using the VXLAN to one or more corresponding data receivers, thereby avoiding using a complex and costly multicast technology to some extent, and reducing network economic costs.

### BRIEF DESCRIPTION OF DRAWINGS

FIG. 1 is a schematic diagram of a network according to an embodiment of this application;
FIG. 2a to FIG. 2c are a schematic diagram of data sending according to an embodiment of this application;

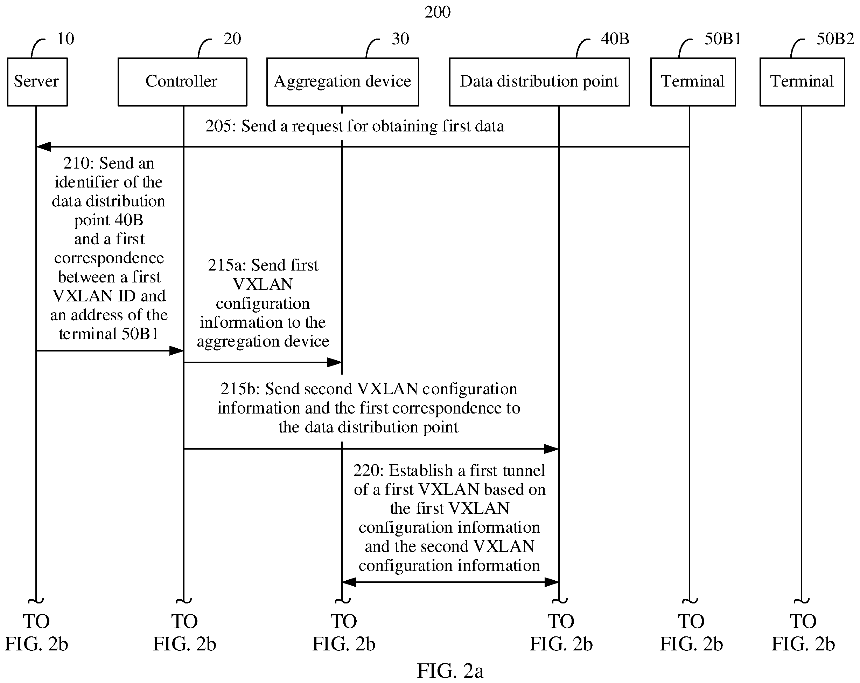

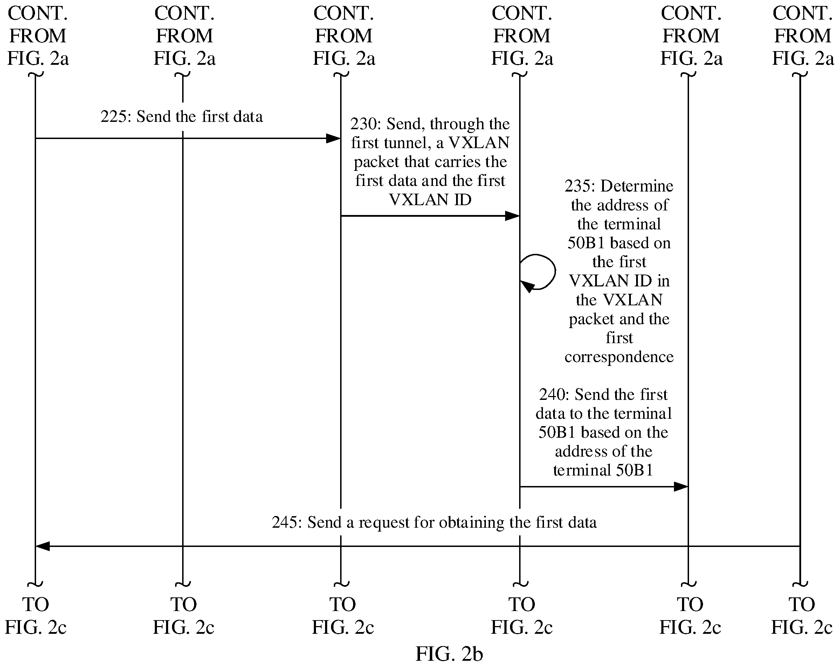

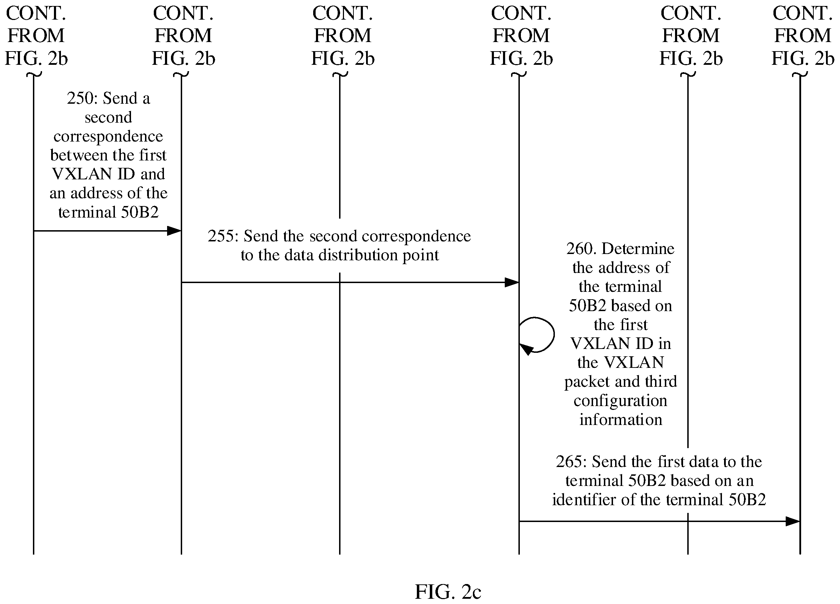

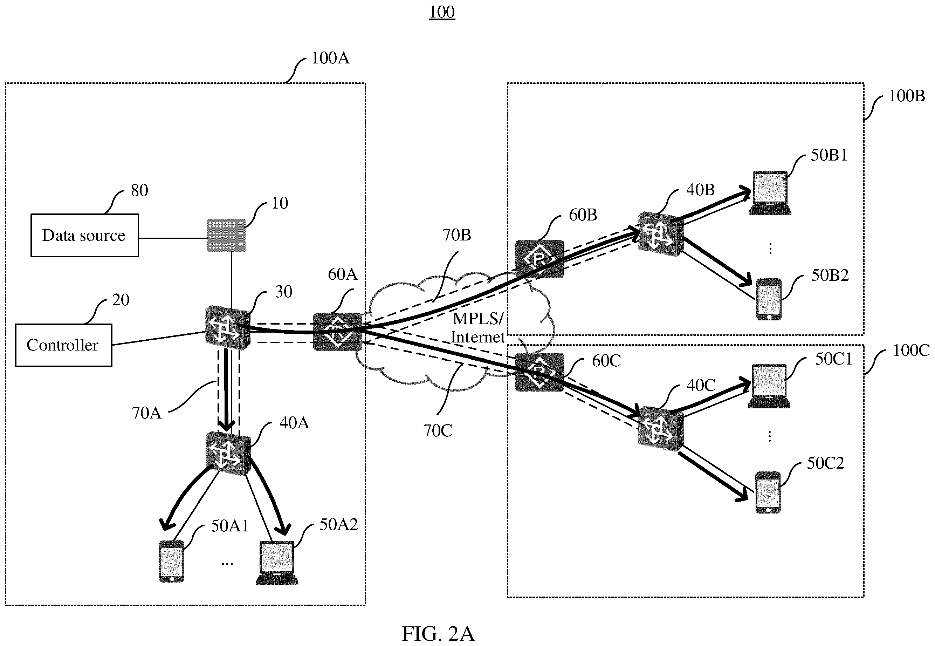

FIG. 2A is a schematic diagram of data sending according to an embodiment of this application;

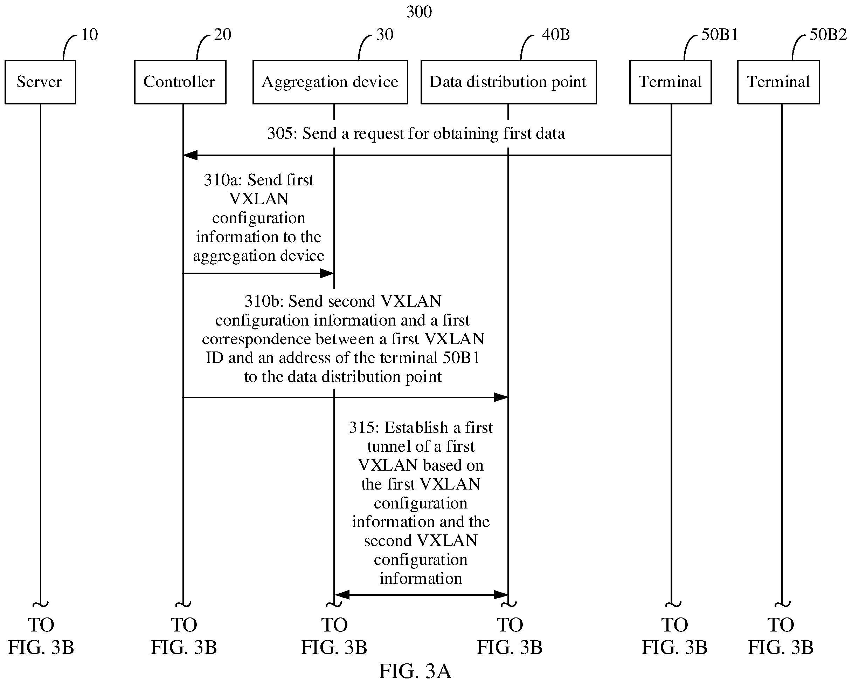

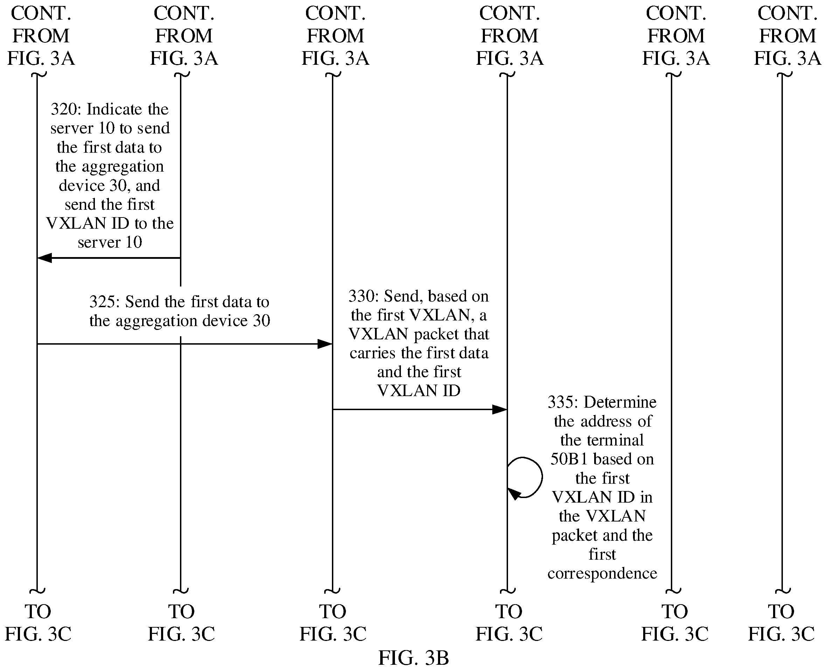

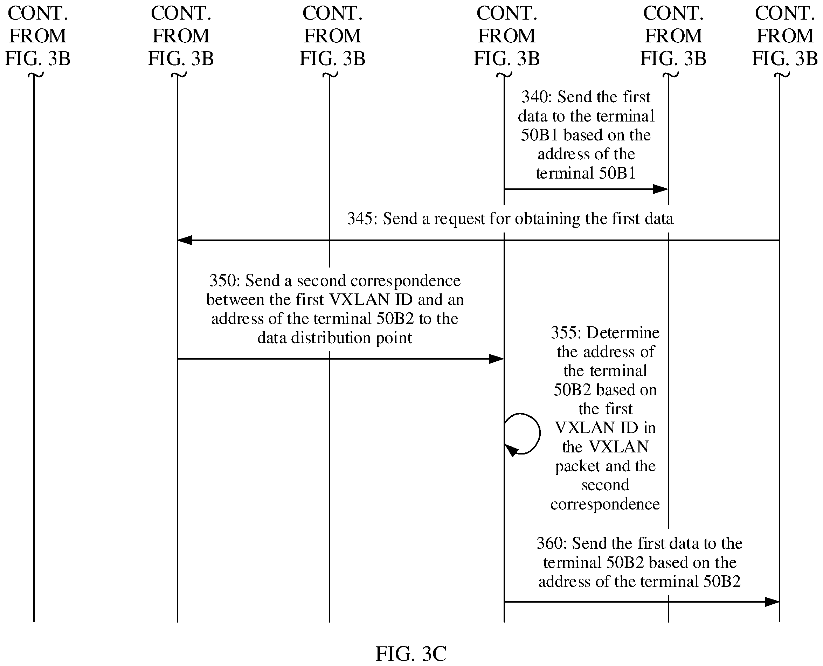

FIG. 3A to FIG. 3C are a schematic diagram of data sending according to an embodiment of this application;

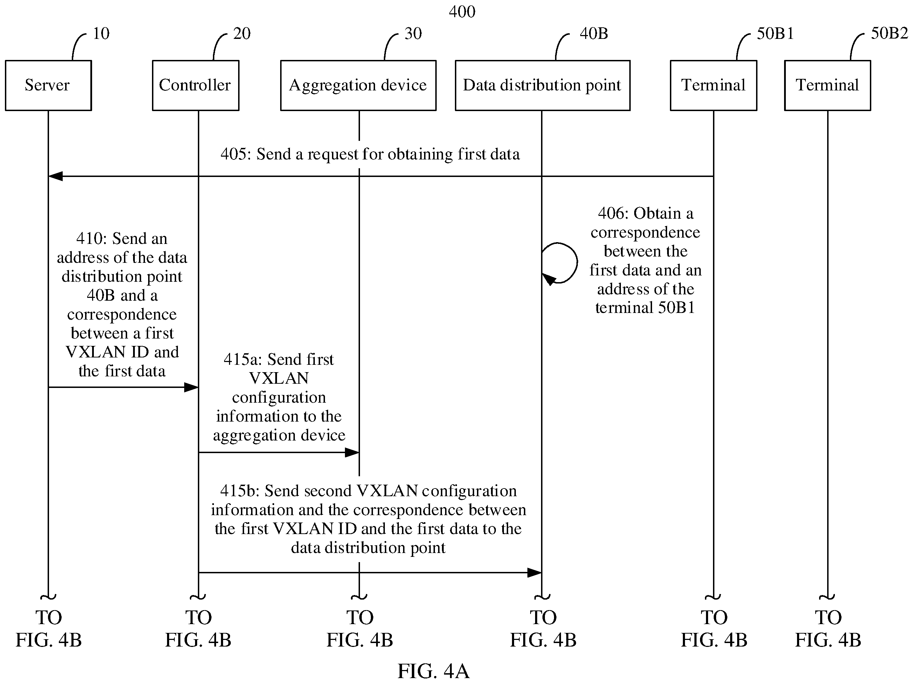

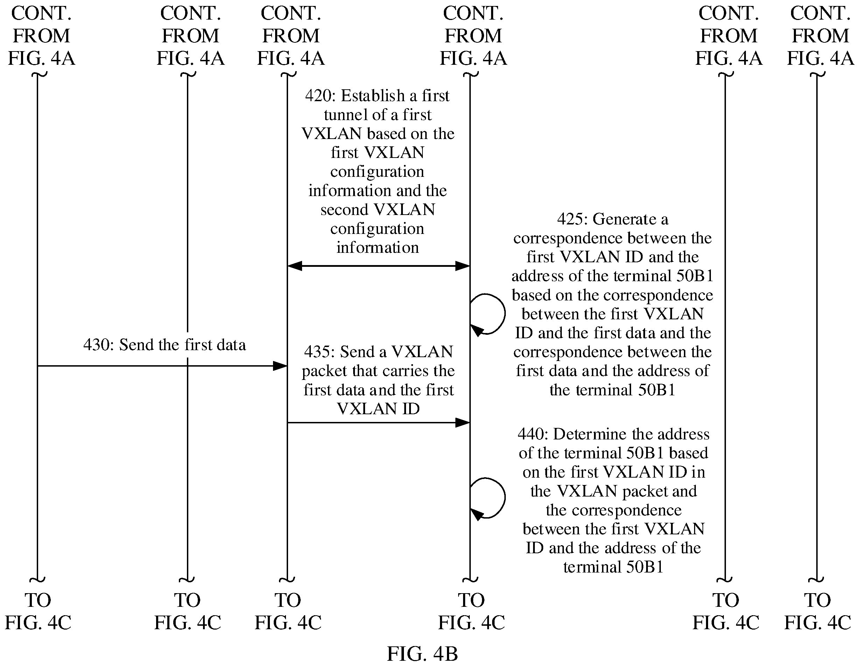

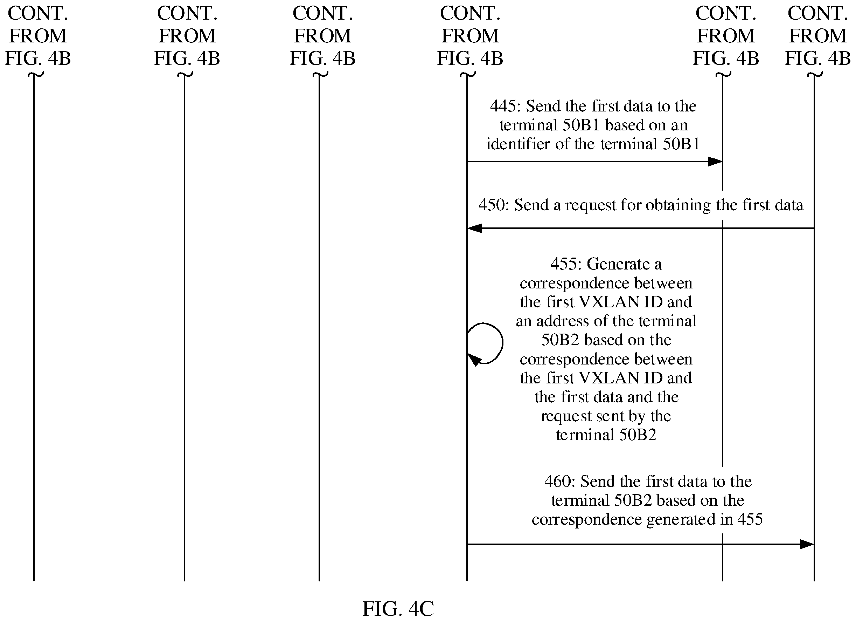

FIG. 4A to FIG. 4C are a schematic diagram of data sending according to an embodiment of this application;

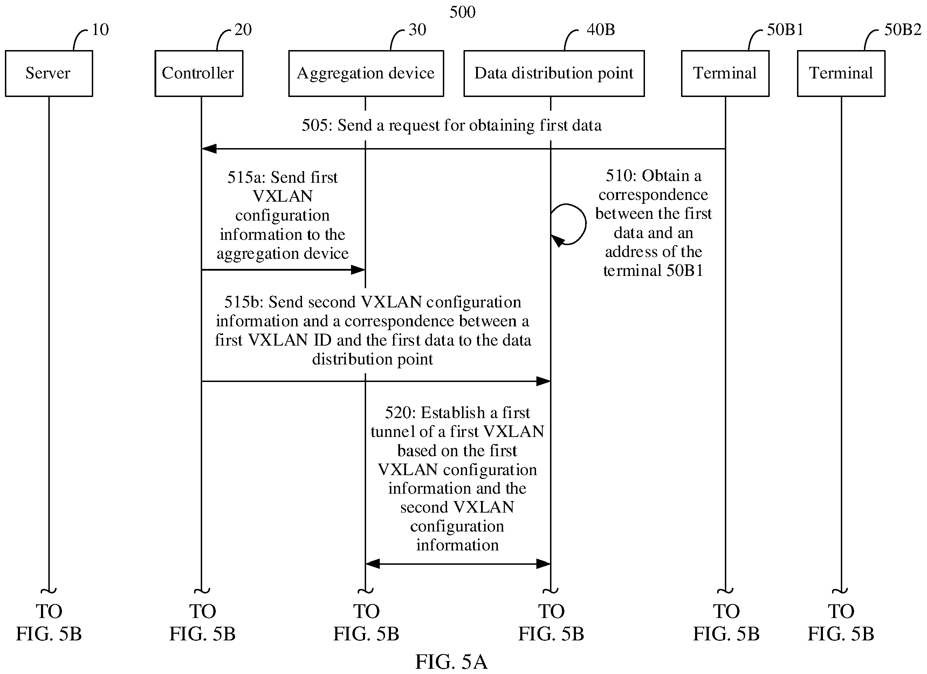

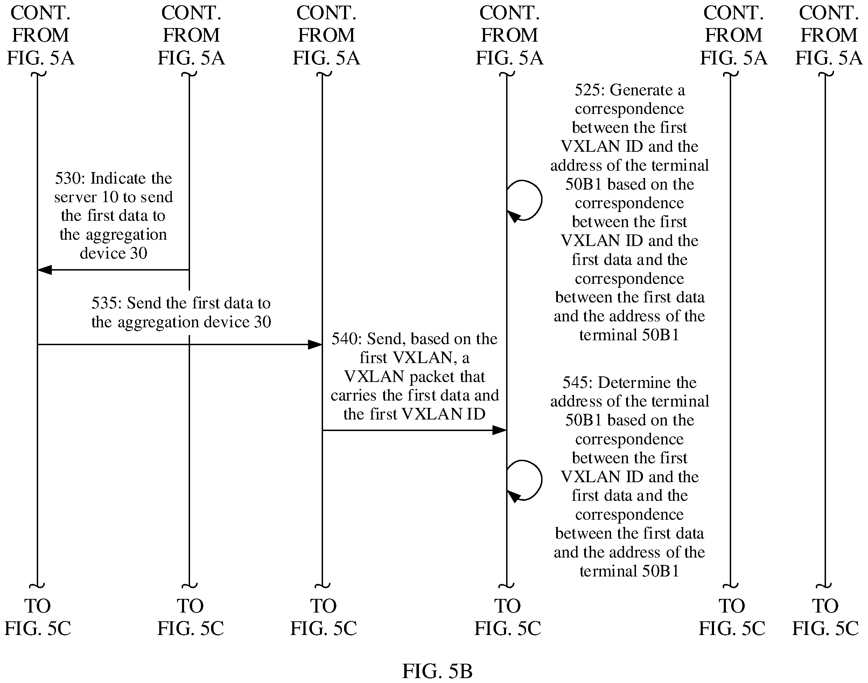

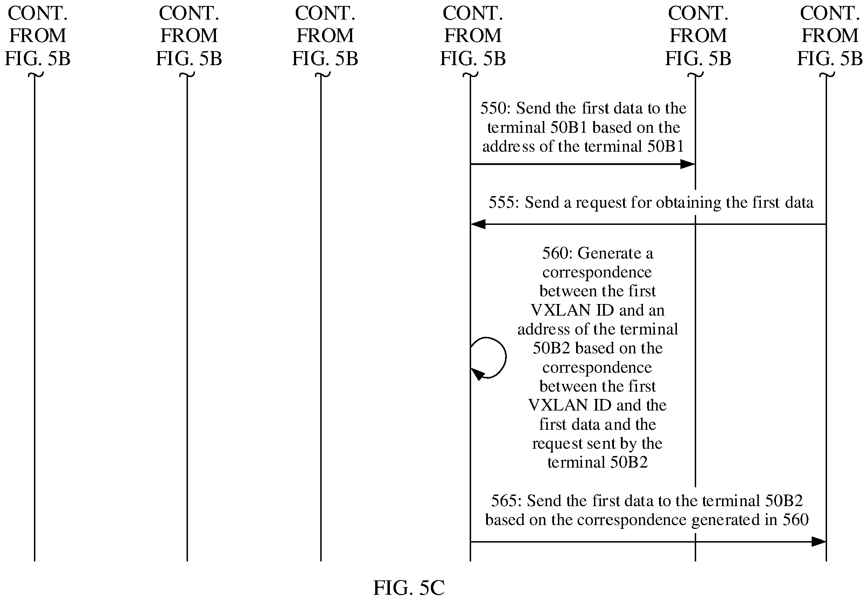

FIG. 5A and FIG. 5C are a schematic diagram of data sending according to an embodiment of this application;

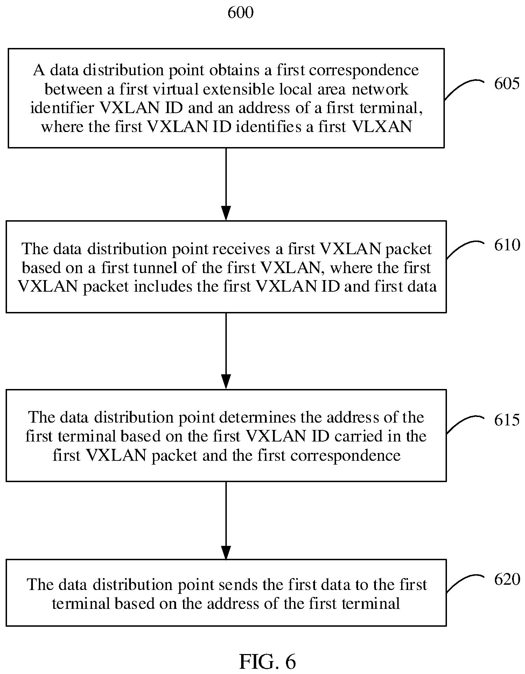

FIG. 6 is a schematic diagram of data sending according to an embodiment of this application;

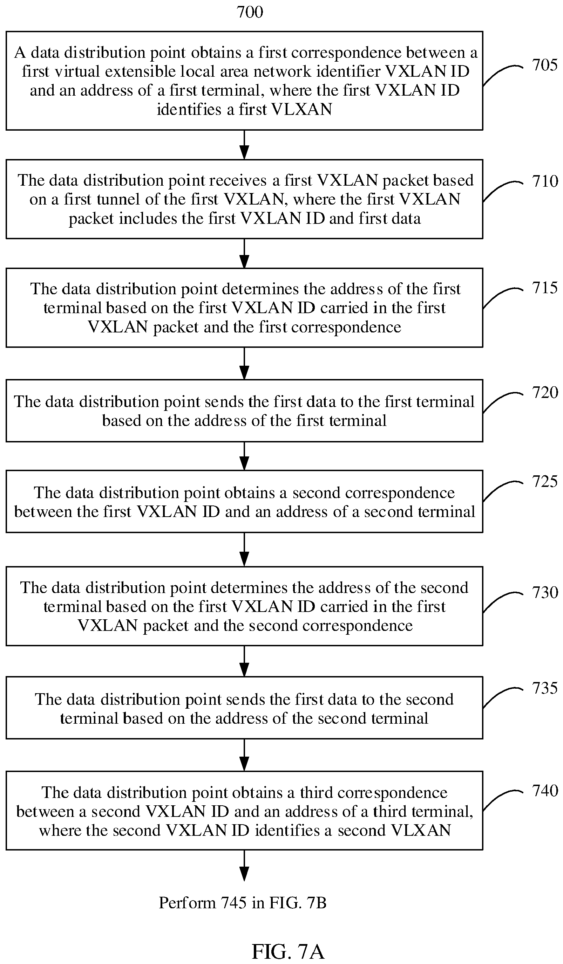

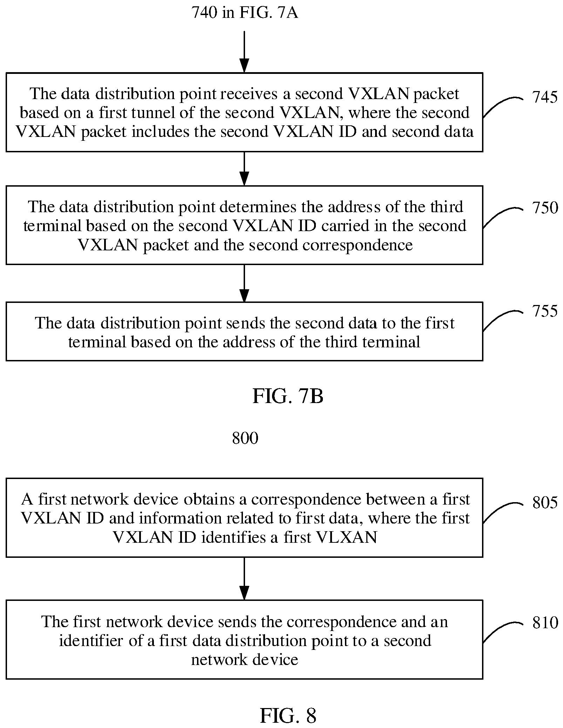

FIG. 7A and FIG. 7B are a schematic diagram of data sending according to an embodiment of this application;
FIG. 8 is a schematic diagram of data sending according to an embodiment of this application;

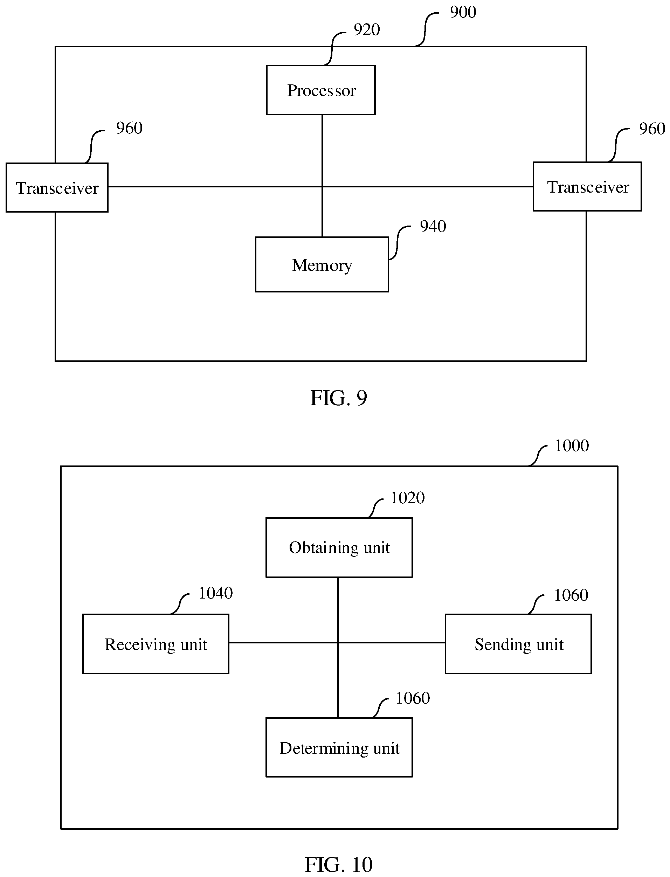

FIG. 9 is a block diagram of a data distribution point according to an embodiment of this application;
FIG. 10 is a block diagram of a data distribution point according to an embodiment of this application; and

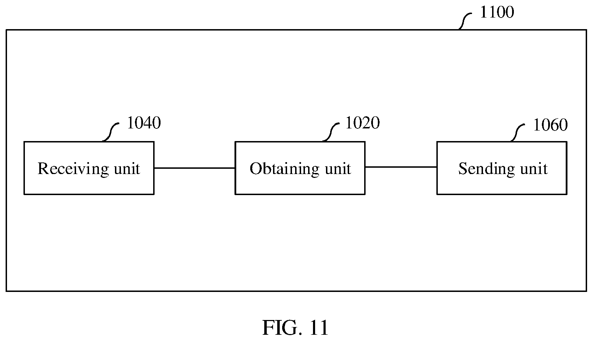

FIG. 11 is a block diagram of a network device according to an embodiment of this application.

### DESCRIPTION OF EMBODIMENTS

The following describes the present invention in detail with reference to the accompanying drawings and specific embodiments. However, it should be noted that, the following embodiments are only examples for ease of understanding the technical solutions.

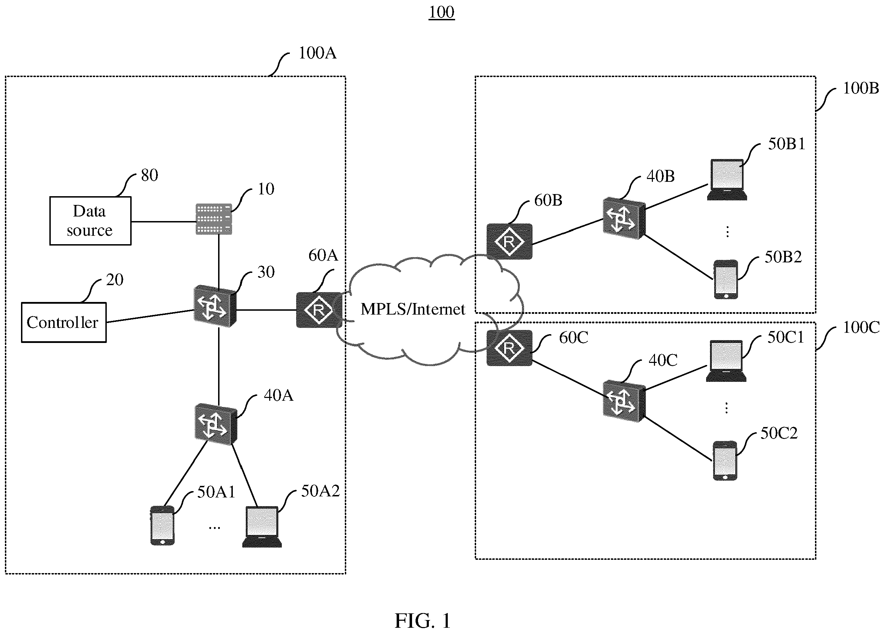

FIG. 1 is a schematic diagram of a network 100 according to an embodiment of this application.

The network 100 includes networks 100A, 100B, and 100C. The networks 100A, 100B, and 100C may be connected by using a technology such as a multi-protocol label switching (MPLS) network or the internet (Internet). For example, the network 100A may be a headquarters network of an enterprise, and the networks 100B and 100C may be two branch networks of the enterprise. In another example, the networks 100A, 100B, and 100C may all be branch networks. Alternatively, the network 100C may be a headquarters network, and the networks 100A and 100C may be branch networks. In addition, the networks 100A, 100B, and 100C may be three peer sub-networks (peer sub-networks) in a network system in which a headquarters network and a branch network are not distinguished from each other. As shown in FIG. 1, the network 100A includes a server 10, a controller 20, an aggregation device 30, a data distribution point 40, a terminal 50, a border node 60, and a data source device 80. The networks 100B and 100C each include a data distribution point 40, a terminal 50, and a border node 60. In some embodiments, the aggregation device 30 and the data distribution point 40 may be respectively located on border nodes of networks of the aggregation device 30 and the data distribution point 40. In some embodiments, the server 10 and the controller 20 may be located on a same device.

The server 10 in the network 100A may be a server based on an x86 architecture or an ARM architecture, or may be another type of server. The controller 20 may be a software-defined networking (SDN) controller, a controller for a segment routing (SR) network, or another type of network controller. In actual deployment, the controller 20 may be an independent physical device, or may be a logical entity deployed in the server 10. The aggregation device 30 is a network device having a data exchange capability, and is usually a headquarters switch and serves as an aggregation node of a plurality of data distribution points 40. For example, the aggregation device 30 shown in FIG. 1 serves as an aggregation node of three data distribution points 40 in the networks 100A, 100B, and 100C. The data distribution point 40 is also a network device having a data exchange capability, and is usually a campus switch and is configured to distribute, to the terminal 50, data that is from the aggregation device 30. A common terminal 50 may be a personal computer, a smartphone, a tablet computer, or the like. The border node 60 is located at the border of the network and is configured to send, to the data distribution points 40 in the networks 100B and 100C, data that is from the aggregation device 30 in the network 100A. The data source device 80 may be a real-time data collection device, for example, a multimedia collector, a camera, a mobile phone, or any device that can request data. The data source device 80 may collect data in real time, to send the data in real time to the plurality of terminals 50 located in the different networks. In some cases, the data source device 80 may alternatively be a storage device that stores data content, and may send the data content to the plurality of terminals 50 when being invoked by the server.

In some embodiments, the networks 100A, 100B, and 100C may each further include more data distribution points 40. The network 100 may further include more networks whose structures are the same as or similar to those of the networks 100B and 100C.

In some embodiments, a VXLAN used to send data to one or more terminals 50 is established between the aggregation device 30 and the data distribution point 40, and a correspondence between the VXLAN and one or more addresses of the one or more terminals 50 that request to obtain the data is stored on the data distribution point 40. When receiving the data by using the VXLAN, the data distribution point 40 determines, based on the correspondence, the one or more addresses of the one or more terminals 50 that request the data, and sends the requested data to the one or more terminals 50 based on the one or more addresses. The correspondence may be allocated by the server 10 or the controller 20 to the data distribution point 40, or may be generated by the data distribution point 40 based on some received information. By using this method, the one or more terminals 50 that request the data can obtain the data. This implements a new data transmission mechanism.

FIG. 2a to FIG. 2c are a schematic diagram of data sending according to an embodiment of this application.

205: A terminal 50B1 sends a request for obtaining first data to a server 10.

When the terminal 50B1 needs to obtain the first data, the terminal 50B1 sends the request for obtaining the first data to the server 10. The request may carry an address of the terminal 50B1, for example, an IP address of the terminal 50B1. In some embodiments, the request may further carry an identifier of a data distribution point 40B corresponding to the terminal 50B1, for example, an IP address of the data distribution point 40B, so that the server can directly determine the data distribution point 40B corresponding to the terminal 50B1. The first data may be data of a first data source or a first program. The server may provide data of a plurality of data sources or a plurality of programs for the terminal based on the request.

210: The server 10 sends the identifier of the data distribution point 40B and a first correspondence between a first virtual extensible local area network (Virtual Extensible LAN, VXLAN) identifier ID and the address of the terminal 50B1 to a controller 20. The first VXLAN ID is used to identify a first VXLAN between an aggregation device 30 and a data distribution point 40. In some embodiments, the first VXLAN may alternatively be between the server 10 and the data distribution point 40, or may be between two other devices. In some embodiments, a VXLAN ID may be a VXLAN network identifier (VNI) in RFC 7348.

In some embodiments, because the request for obtaining the first data includes the identifier of the data distribution point 40B, the server 10 may send the identifier of the data distribution point 40B in the request to the controller 20. In some embodiments, the request for obtaining the first data does not carry the identifier of the data distribution point 40B. In this case, the server determines an identifier of a data distribution point corresponding to the terminal 50B1, namely, the identifier of the data distribution point 40B, based on the address of the terminal 50B1 and a topology of a branch network 100B.

In some embodiments, the first correspondence sent by the server 10 to the controller 20 may be generated by the server 10, or may be pre-stored in the server 10 by a network administrator.

215a: The controller 20 sends first VXLAN configuration information to the aggregation device 30.

The first VXLAN configuration information is configuration information that is used by the aggregation device 30 to establish a first tunnel of the first VXLAN with the data distribution point 40B. Because terminals in different branch networks may request same data, and VXLANs allocated by the server 10 or the controller 20 for the same data may be the same, the aggregation device may establish a plurality of VXLAN tunnels belonging to a same VXLAN with a plurality of data distribution points in a plurality of branch networks, to send data that belongs to a same data source or a same program to the plurality of branch networks. In the example shown in FIG. 2a to FIG. 2c, one tunnel of the first VXLAN is established between the aggregation device 30 and the data distribution point 40B. In some cases, one VXLAN may have only one tunnel, and the tunnel can be considered as the VXLAN. In some cases, one VXLAN includes a plurality of tunnels, and each tunnel is a part of the VXLAN.

215b: The controller 20 sends second VXLAN configuration information and the first correspondence between the first VXLAN ID and the address of the terminal 50B1 to the data distribution point 40B.

The second VXLAN configuration information is configuration information that is used by the data distribution point 40B to establish a first tunnel of the first VXLAN with the aggregation device 30. In some embodiments, the first correspondence is a direct correspondence between the first VXLAN ID and the address of the terminal 50B1. In some embodiments, the first correspondence is an indirect correspondence between the first VXLAN ID and the address of the terminal 50B1. In an example in which the first correspondence is the indirect correspondence, the first correspondence includes a correspondence between the first VXLAN ID and a virtual port, and further includes a correspondence between the virtual port and the address of the terminal 50B1.

In some embodiments, the terminal does not need to send the request for obtaining the first data, and the server or the controller may determine, based on a configuration of the network administrator, that the terminal 50B1 needs to obtain the first data, to perform 215a and 215b. In addition, a plurality of devices in the network may continue to perform operations after 215b in FIG. 2a to FIG. 2c.

In some embodiments, if the terminal 50B1 requests to obtain second data that belongs to another data source or another program instead of the first data, the server may send, to the aggregation device 30 and the data distribution point 40B, VXLAN configuration information used to establish a second VXLAN. In this way, the aggregation device 30 and the data distribution point 40B establish a tunnel of the second VXLAN used to send the second data. A specific method for processing the VXLAN configuration information used to establish the tunnel of the second VXLAN may be the same as or similar to the foregoing specific method for processing the VXLAN configuration information used to establish the first VXLAN.

It should be noted that, in 215b, it is not required that the second VXLAN configuration information and the first correspondence be sent to the data distribution point 40B by performing a same operation. In some embodiments, the second VXLAN configuration information and the first correspondence may be sent to the data distribution point 40B by performing different operations.

220: The aggregation device 30 and the data distribution point 40B establish the first tunnel of the first VXLAN between the aggregation device 30 and the data distribution point 40 based on the first VXLAN configuration information and the second VXLAN configuration information.

225: The server 10 sends the first data to the aggregation device 30.

In some embodiments, when sending the first data to the aggregation device, the server 10 further needs to indicate the aggregation device 30 to send the first data by using the first VXLAN. In some embodiments, the server 10 may not indicate the aggregation device 30 to send the first data by using the first VXLAN, but the controller 20 may perform indication.

225 may be performed after the server 10 receives acknowledgment information that is sent by the aggregation device 30 and that indicates that the first tunnel of the first VXLAN has been successfully established, or may be performed after preset duration after 210 is performed.

In some embodiments, the data sent by the server may be video data, audio data, another type of data, or mixed data including a plurality of types of data. The data may be an entire piece of data, for example, a movie, or may be a part of a piece of data. In some embodiments, the server may send live broadcast data. After requesting to obtain data at different time points, different terminals obtain live broadcast data corresponding to the request time points of the terminals.

230: The aggregation device 30 sends the first data to the data distribution point 40B through the first tunnel of the first VXLAN.

In some embodiments, the server 10 sends a correspondence between the first data and an ID of the first VXLAN to the aggregation device 30. The ID of the first VXLAN is used to indicate the aggregation device 30 to send the first data based on the ID of the first VXLAN. For example, the ID of the first VXLAN may be carried in a packet header of a VXLAN packet that carries the first data. In this case, the aggregation device 30 may determine the data distribution point 40B based on the ID of the first VXLAN and a correspondence between the ID of the first VXLAN and the identifier of the data distribution point 40B. Therefore, the first data is further sent to the data distribution point 40B through the first tunnel of the first VXLAN. When sending the first data, an aggregation node 30 generates the VXLAN packet that carries the first data, and includes, in the VXLAN packet header of the VXLAN packet, the ID of the first VXLAN and the identifier of the data distribution point 40B, for example, the IP address of the data distribution point 40B. The ID of the first VXLAN may also be referred to as a first VXLAN ID.

In some embodiments, the server does not need to send the ID of the first VXLAN to the aggregation device 30. The aggregation device 30 may determine, based on a flow identifier of a packet flow that carries the first data and a correspondence that is stored in the aggregation device 30 and that is between the ID of the first VXLAN and the flow identifier, for example, an IP triple or an IP quintuple, that the first data needs to be sent to the data distribution point 40B based on the ID of the first VXLAN. A specific method for sending the first data may be the same as or similar to a method for sending the first data when the ID of the first VXLAN is carried in the packet flow that carries the first data.

235: After receiving the first data, the data distribution point 40B determines the address of the terminal 50B1, for example, the IP address of the terminal 50B1, based on the ID of the first VXLAN carried in the VXLAN packet that carries the first data and the first correspondence stored in the data distribution point 40B, namely, the correspondence between the ID of the first VXLAN and the address of the terminal 50B1. In some embodiments, the data distribution point may alternatively send the ID of the first VXLAN to a device that stores the first correspondence. The device determines the address of the terminal 50B1 based on the received ID of the first VXLAN and the locally stored first correspondence, and sends the address of the terminal 50B1 to the data distribution point 40B.

240: The data distribution point 40B sends the first data to the terminal 50B1 based on the address of the terminal 50B1.

In some embodiments, the data distribution point 40B may send the first data in a VXLAN manner, where the first data is sent in a unicast manner. For example, the data distribution point 40B may generate the VXLAN packet that carries the first data, the ID of the first VXLAN, and the address, for example, the IP address, of the terminal 50B1. The ID of the first VXLAN and the address of the terminal 50B1 are carried in the VXLAN packet header of the VXLAN packet. Then, the data distribution point 40B sends the VXLAN packet to the terminal 50B1 in the unicast manner. In this way, the terminal 50B1 may determine, based on the address of the terminal 50B1 in the VXLAN packet header, that the terminal 50B1 is a receiver. For example, the IP address of the terminal 50B1 is carried in the VXLAN packet header as a destination IP address. The first VXLAN ID may indicate that the sent data is the data requested by the terminal 50B1.

In some embodiments, the data distribution point 40B may send the first data in an IP unicast manner. For example, the data distribution point 40B may generate an IP packet that carries the first data, and a destination address of the IP packet is the IP address of the terminal 50B1.

245: A terminal 50B2 sends a request for obtaining the first data to the server 10.

When the terminal 50B2 needs to obtain the first data, the terminal 50B2 sends the request for obtaining the first data to the server 10. The request may carry an address of the terminal 50B2, for example, an IP address of the terminal 50B2. In some embodiments, the request may further carry the identifier of the data distribution point 40B corresponding to the terminal 50B2, for example, the IP address of the data distribution point 40B. It should be noted that 245 does not need to be performed after 240.

250: The server 10 sends a second correspondence between the ID of the first VXLAN and the address of the terminal 50B2 to the controller 20.

The server 10 may determine that in the network, the first VXLAN has been used to provide the first data to a branch network in which the terminal 50B2 is located. Therefore, the server 10 determines to continue to use the first VXLAN to provide the first data to the terminal 50B2. Therefore, the server 10 sends the second correspondence between the ID of the first VXLAN and the address of the terminal 50B2 to the controller 20.

255: The controller 20 sends the second correspondence to the data distribution point 40B.

260: The data distribution point 40B determines, based on the second correspondence, that the first data in the VXLAN packet that carries the ID of the first VXLAN needs to be further sent to the terminal 50B2.

The data distribution point 40B currently obtains both the first correspondence and the second correspondence. Therefore, the data distribution point 40B not only sends the first data to the terminal 50B1, but also sends the first data to the terminal 50B2.

265: The data distribution point 40B sends the first data to the terminal 50B2 based on the address of the terminal 50B2.

The first data may be sent in a VXLAN manner, or may be sent in an IP manner, and both the VXLAN manner and the IP manner are unicast.

Based on the foregoing operations, a data distribution point in a branch network in which a plurality of data receivers are located may obtain correspondences between an identifier of a VXLAN used to transmit data corresponding to the plurality of data receivers and a plurality of identifiers of the plurality of data receivers, and separately send the data to the plurality of data receivers based on the correspondences. In this way, a multicast-like service can be provided when no multicast protocol is used.

In the embodiment shown in FIG. 2a to FIG. 2c, a plurality of terminals send data requests to the server 10. In some embodiments, terminals may send data requests to a controller 20. Then, the controller 20 obtains, from a server 10, configuration information required for establishing a first VXLAN, to establish the first VXLAN. In addition, a data distribution point 40 obtains correspondences between an ID of the first VXLAN and addresses of a plurality of data receivers, namely, the terminals. Alternatively, in some embodiments, terminals may directly send data requests to a data distribution point 40. For example, after the terminal 50B1 sends the request for obtaining the first data to the data distribution point 40B, the data distribution point 40B communicates with the server 10 and/or the controller 20. In this way, the controller 20 respectively sends the first VXLAN configuration information and the second VXLAN configuration information to the aggregation device 30 and the data distribution point 40B, to establish the first tunnel of the first VXLAN between the aggregation device 30 and the data distribution point 40B. In addition, the data distribution point 40 obtains correspondences between an ID of the first VXLAN and addresses of a plurality of data receivers such as the terminals. After the first tunnel is established, the terminal 50B2 may send, to a data distribution point, the request for obtaining the first data. In this case, the data distribution point 40B already knows that data transmitted in the first tunnel is the first data, and the first tunnel corresponds to the ID corresponding to the first VXLAN. Therefore, the data distribution point 40B may establish the correspondence between the ID of the first VXLAN and the address of the terminal 50B2, and send the first data to the terminal 50B2 based on the correspondence, where the address of the terminal 50B2 may be obtained from the request sent by the terminal 50B2. A specific method for sending the first data to the terminal 50B2 may be the same as or similar to the sending methods in 240 and 265.

In some embodiments, terminals serving as the data receivers do not need to actively send data requests, but the controller 20 determines the terminals serving as the data receivers, determines a corresponding data distribution point 40, establishes a VXLAN between an aggregation device and the data distribution point 40, and configures, on the data distribution point 40, correspondences between an identifier of the VXLAN and the plurality of terminals serving as the data receivers. In the foregoing embodiment, a method for establishing a VXLAN tunnel from the aggregation device 30 to the data distribution point 40 may be the same as or similar to the method shown in FIG. 2a to FIG. 2c.

In some embodiments, terminals 50 serving as the data receivers are separately located in different networks. For example, some terminals 50 are located in a branch network 1, some terminals 50 are located in a branch network 2, and some terminals 50 are located in a headquarters network. In this case, a plurality of VXLAN tunnels from an aggregation device to data distribution points in the different networks may be established. These VXLAN tunnels belong to a same VXLAN, have a same VXLAN ID, and are used to transmit data that belongs to a same data source or a same program. For example, when the server 10 needs to send the first data to terminals 50A1, 50A2, 50B1, 50B2, 50C1, and 50C2, three tunnels that belong to a same VXLAN need to be established from the aggregation device 30 to data distribution points 40A, 40B, and 40C. A method for establishing each tunnel and a method for transmitting the first data may respectively be the same as or similar to the tunnel establishment method and the data transmission method shown in FIG. 2a to FIG. 2c.

In some embodiments, data that belongs to different data sources or different programs needs to be sent to a same branch network or a same terminal. A plurality of tunnels that belong to different VXLANs may be established between an aggregation node 30 and a data distribution point 40 in the branch network. For example, when first data and second data that belong to the different data sources or the different programs need to be sent to the branch network 100B, a tunnel 1 that belongs to the first VXLAN and a tunnel 2 that belongs to the second VXLAN may be established between the aggregation node 30 and the data distribution point 40B. The tunnel 1 is configured to transmit the first data, and the tunnel 2 is configured to transmit the second data. A method for establishing each tunnel is the same as or similar to the method for establishing the first tunnel of the first VXLAN shown in FIG. 2a to FIG. 2c. Because the tunnel 1 and the tunnel 2 belong to the different VXLANs, the tunnel 1 and the tunnel 2 have different VXLAN IDs.

A sequence of the operations shown in FIG. 2a to FIG. 2c is determined based on a logical relationship between the operations. The sequence shown in FIG. 2a to FIG. 2c is a possible example, but is not a unique case. This principle is also applicable to execution sequences of operations in a plurality of other embodiments of this application.

FIG. 2A is a schematic diagram of data sending according to an embodiment of this application. FIG. 2A shows a manner in which first data is sent to a plurality of terminals 50A1, 50A2, 50B1, 50B2, 50C1, and 50C2 when the terminals all request the first data in the embodiment corresponding to FIG. 2a to FIG. 2c.

Because both the terminals 50B1 and 50B2 belong to a network 100B, a first tunnel 70B of a first VXLAN needs to be established between an aggregation device 30 and a data distribution point 40B. The first data is sent to the data distribution point 40B through the first tunnel 70B. Then, the data distribution point 40B copies the first data into two copies, and separately sends the two copies of first data to the terminals 50B1 and 50B2. The first tunnel 70B of the first VXLAN may also be understood as the first VXLAN between the aggregation device 30 and the data distribution point 40B. For a specific tunnel establishment and data sending process, refer to corresponding content in the embodiment shown in FIG. 2a to FIG. 2c.

Because both the terminals 50C1 and 50C2 belong to a network 100C, a second tunnel 70C of the first VXLAN needs to be established between the aggregation device 30 and a data distribution point 40C. The first data is sent to the data distribution point 40C through the second tunnel 70C. Then, the data distribution point 40C copies the first data into two copies, and separately sends the two copies of first data to the terminals 50C1 and 50C2. The second tunnel 70C of the first VXLAN may also be understood as the first VXLAN between the aggregation device 30 and the data distribution point 40C. A specific tunnel establishment and data sending process is similar to a process of sending the first data to the terminals 50B1 and 50B2 in the embodiment shown in FIG. 2a to FIG. 2c.

Because both the terminals 50A1 and 50A2 belong to a network 100A, a third tunnel 70A of the first VXLAN needs to be established between the aggregation device 30 and a data distribution point 40A. The first data is sent to the data distribution point 40A through the third tunnel 70A. Then, the data distribution point 40A copies the first data into two copies, and separately sends the two copies of first data to the terminals 50A1 and 50A2. The third tunnel 70A of the first VXLAN may also be understood as the first VXLAN between the aggregation device 30 and the data distribution point 40A. A specific tunnel establishment and data sending process is similar to a process of sending the first data to the terminals 50B1 and 50B2 in the embodiment shown in FIG. 2a to FIG. 2c.

FIG. 3A to FIG. 3C are a schematic diagram of data sending according to an embodiment of this application. In some embodiments corresponding to FIG. 2a to FIG. 2c, a terminal 50B1 sends a request for obtaining first data to a server 10. However, in some embodiments corresponding to FIG. 3A to FIG. 3C, a terminal 50B1 sends a request for obtaining first data to a controller 20.

305: The terminal 50B1 sends the request for obtaining the first data to the controller 20. In some embodiments, content of the request may be the same as content of the request in 205.

In some embodiments, the controller 20 determines, based on the request for obtaining the first data, that a data distribution point 40B is a data distribution point corresponding to the terminal 50B1. In addition, the controller 20 may allocate a first VXLAN for the first data, to send the first data to the terminal 50B1 through a first tunnel of the first VXLAN, namely, a part of the first VXLAN between an aggregation device 30 and the data distribution point 40B. Therefore, the controller 20 needs to establish the first tunnel of the first VXLAN between the aggregation device 30 and the data distribution point 40B, to send the first data to the terminal 50B1 through the first tunnel. In some embodiments, the first VXLAN may alternatively be established between the server and the data distribution point.

310a: The controller 20 sends first VXLAN configuration information to the aggregation device. In some embodiments, the first VXLAN configuration information is the same as the first VXLAN configuration information in 210a, and is used to enable the aggregation device 30 to establish the first tunnel of the first VXLAN with the data distribution point 40B.

310b: The controller 20 sends second VXLAN configuration information to the data distribution point 40B, and further sends a first correspondence between a first VXLAN ID and an address of the terminal 50B1 to the data distribution point 40B. In some embodiments, the second VXLAN configuration information is the same as the second VXLAN configuration information in 210b, and is used to enable the data distribution point 40B to establish the first tunnel of the first VXLAN with the aggregation device 30. The first correspondence may be the same as the first correspondence in 210b.

315: The aggregation device 30 and the data distribution point 40B establish the first tunnel of the first VXLAN based on the first VXLAN configuration information and the second VXLAN configuration information.

320: The controller 20 indicates, to the server 10, that the first data is requested. In some embodiments, the controller 20 may further send, to the server 10, the first VXLAN ID used to identify the first VXLAN. In some embodiments, the controller 20 does not need to send the first VXLAN ID to the server.

325: The server 10 sends the first data to the aggregation device 30.

In some embodiments, the server 10 may send a correspondence between an identifier of the first data and the first VXLAN ID to the aggregation device 30, so that the controller 20 learns that the server 10 requests the controller 20 to send the first data by using the first VXLAN identified by the first VXLAN ID. Because the first tunnel of the first VXLAN is a part of the first VXLAN, the aggregation device 30 sends the first data to the data distribution point 40B through the first tunnel. When m tunnels of the first VXLAN are separately established between the aggregation device 30 and a plurality of data distribution points, it indicates that n terminals request the first data. Therefore, the aggregation device 30 may send the first data to each data distribution point through each tunnel. Both m and n are positive integers, and m is less than or equal to n.

In some embodiments, the controller 20 does not need to send the first VXLAN ID to the server 10, and the server 10 does not need to indicate the aggregation device 30 to send the first data by using the first VXLAN. However, the controller 20 may indicate the aggregation device 30 to send the first data by using the first VXLAN.

330: The aggregation device 30 sends the first data to the data distribution point 40B based on the first VXLAN. The first data is carried in a VXLAN packet, and the VXLAN packet carries the first VXLAN ID.

335: The data distribution point determines the address of the terminal 50B1 based on the first VXLAN ID in the VXLAN packet and the first correspondence.

Because the data distribution point 40B receives the VXLAN packet that carries the first VXLAN ID and the first data, and further obtains the first correspondence between the first VXLAN ID and the address of the terminal 50B1, the data distribution point 40B determines the address of the terminal 50B1 based on the first VXLAN ID in the VXLAN packet and the first correspondence. In other words, the aggregation device 30 determines that the terminal 50B1 corresponds to the first data and the first data needs to be sent to the terminal 50B1.

340: The data distribution point 40B sends the first data to the terminal 50B1, so that the terminal 50B1 can receive the first data requested by the terminal 50B1.

345: A terminal 50B2 sends a request for requesting the first data to the controller 20.

350: The controller 20 sends a second correspondence between the first VXLAN ID and an address of the terminal 50B2 to the data distribution point 40B. The second correspondence is used to indicate the data distribution point 40B to send data received by using the first VXLAN to the terminal 50B2. Because the data received by the data distribution point 40B by using the first VXLAN includes the first data, the controller 20 actually indicates the data distribution point 40B to send the first data to the terminal 50B2. In this case, the data distribution point 40B includes both the first correspondence and the second correspondence. Therefore, in addition to sending the first data to the terminal 50B1, the data distribution point 40B further sends the first data to the terminal 50B2.

355: The data distribution point 40B determines the address of the terminal 50B2 based on the first VXLAN ID in the VXLAN packet and the second correspondence. In other words, the aggregation device 30 determines that the first data needs to be sent to the terminal 50B2.

360: The data distribution point 40B sends the first data to the terminal 50B2, so that the terminal 50B2 can receive the first data requested by the terminal 50B2. In this way, both the terminals 50B1 and 50B2 receive the first data.

FIG. 4A to FIG. 4C are a schematic diagram of data sending according to an embodiment of this application. In some embodiments corresponding to FIG. 2a to FIG. 2c and FIG. 3A to FIG. 3C, a data distribution point 40B receives a correspondence between a first VXLAN ID and a terminal. However, in some embodiments corresponding to FIG. 4A to FIG. 4C, a data distribution point 40B receives a correspondence between a first VXLAN ID and first data, and generates a correspondence between the first VXLAN ID and a terminal based on the correspondence between the first VXLAN ID and the first data.

405: A terminal 50B1 sends a request for obtaining the first data to a server 20. In some embodiments, content of the request may be the same as content of the request in 205 or 305.

406: The data distribution point 40B obtains a correspondence between the first data and an address of the terminal 50B1 based on the first data request.

The request that is sent by the terminal 50B1 to the server 20 and that is used for obtaining the first data passes through the data distribution point 40B. Therefore, the data distribution point 40B may obtain the request, and obtain the correspondence between the first data and the address of the terminal 50B1 based on the request.

410: The server 10 sends an address of the data distribution point 40B and the correspondence between the first VXLAN ID and the first data to a controller 20, where the first VXLAN ID is an identifier of a first VXLAN between an aggregation device 30 and the data distribution point 40B.

415a: The controller 20 sends first VXLAN configuration information to the aggregation device 30. In some embodiments, the first VXLAN configuration information is the same as the first VXLAN configuration information in 210a, and is used to enable the aggregation device 30 to establish a first tunnel of the first VXLAN with the data distribution point 40B.

415b: The controller 20 sends second VXLAN configuration information to the data distribution point 40B, and further sends the correspondence between the first VXLAN ID and the first data to the data distribution point 40B. In some embodiments, the second VXLAN configuration information is the same as the second VXLAN configuration information in 210b, and is used to enable the data distribution point 40B to establish the first tunnel of the first VXLAN with the aggregation device 30.

420: The aggregation device 30 and the data distribution point 40B establish the first tunnel of the first VXLAN based on the first VXLAN configuration information and the second VXLAN configuration information.

425: The data distribution point 40B generates a correspondence between the first VXLAN ID and the address of the terminal 50B1 based on the correspondence between the first VXLAN ID and the first data and the correspondence between the first data and the address of the terminal 50B1.

Because the data distribution point 40B obtains the correspondence between the first data and the address of the terminal 50B1 based on 405 and 406, and further obtains the correspondence between the first VXLAN ID and the first data based on 415b, the data distribution point may generate the correspondence between the first VXLAN ID and the address of the terminal 50B1 based on the two correspondences.

430: The server 10 sends the first data to the aggregation device 30 based on the request for obtaining the first data.

In some embodiments, the server 10 further needs to indicate the aggregation device 30 to send the first data by using the first VXLAN. In some embodiments, the server 10 may not indicate the aggregation device 30 to send the first data by using the first VXLAN, but the controller 20 may perform indication.

435: The aggregation device 30 sends the first data to the data distribution point 40B based on the first VXLAN. The first data is carried in a VXLAN packet, and the VXLAN packet carries the first VXLAN ID.

440: The data distribution point 40 determines the address of the terminal 50B1 based on the first VXLAN ID in the VXLAN packet and the correspondence between the first VXLAN ID and the address of the terminal 50B1.

Actually, the data distribution point 40 determines that the terminal 50B1 corresponds to the first data, and determines that the terminal 50B1 is a receiver of the first data.

445: The data distribution point 40B sends the first data to the terminal 50B1 based on the address of the terminal 50B1.

450: The data distribution point 40B receives a request that is sent by a terminal 50B2 and that is used for obtaining the first data.

A destination address of the request may be the server 10, the controller 20, or the data distribution point 40B.

455: The data distribution point 40B generates a correspondence between the first VXLAN ID and an address of the terminal 50B2 based on the correspondence between the first VXLAN ID and the first data and the request sent by the terminal 50B2. According to the method for generating the correspondence by the data distribution point 40B, a burden on another network device may be reduced.

460: The data distribution point 40B sends the first data to the terminal 50B2 based on the correspondence between the first VXLAN ID and the address of the terminal 50B2.

FIG. 5A and FIG. 5C are a schematic diagram of data sending according to an embodiment of this application.

505: A terminal 50B1 sends a request for obtaining first data to a controller 20.

510: A data distribution point 40B obtains a correspondence between the first data and an address of the terminal 50B1 based on the first data request.

The request that is sent by the terminal 50B1 to the controller 20 and that is used for obtaining the first data passes through the data distribution point 40B. Therefore, the data distribution point 40B may obtain the request, and obtain the correspondence between the first data and the address of the terminal 50B1 based on the request.

In some embodiments, the controller 20 determines, based on the request for obtaining the first data, that the data distribution point 40B is a data distribution point corresponding to the terminal 50B1. In addition, the controller 20 may allocate a first VXLAN for the first data, to send the first data to the terminal 50B1 through a first tunnel of the first VXLAN, namely, a part of the first VXLAN between an aggregation device 30 and the data distribution point 40B. Therefore, the controller 20 needs to establish the first tunnel of the first VXLAN between the aggregation device 30 and the data distribution point 40B, to send the first data to the terminal 50B1 through the first tunnel.

515a: The controller 20 sends first VXLAN configuration information to the aggregation device 30. In some embodiments, the first VXLAN configuration information is the same as the first VXLAN configuration information in 210a, and is used to enable the aggregation device 30 to establish the first tunnel of the first VXLAN with the data distribution point 40B.

515b: The controller 20 sends second VXLAN configuration information to the data distribution point 40B, and further sends a correspondence between a first VXLAN ID and the first data to the data distribution point 40B. In some embodiments, the second VXLAN configuration information is the same as the second VXLAN configuration information in 210b, and is used to enable the data distribution point 40B to establish the first tunnel of the first VXLAN with the aggregation device 30.

520: The aggregation device 30 and the data distribution point 40B establish the first tunnel of the first VXLAN based on the first VXLAN configuration information and the second VXLAN configuration information.

525: The data distribution point 40B generates a correspondence between the first VXLAN ID and the address of the terminal 50B1 based on the correspondence between the first VXLAN ID and the first data and the correspondence between the first data and the address of the terminal 50B1.

Because the data distribution point 40B obtains the correspondence between the first data and the address of the terminal 50B1 based on 505 and 506, and further obtains the correspondence between the first VXLAN ID and the first data based on 515b, the data distribution point may generate the correspondence between the first VXLAN ID and the address of the terminal 50B1 based on the two correspondences. The correspondence between the first VXLAN ID and the address of the terminal 50B1 may be the correspondence between the first VXLAN ID and the address of the terminal 50B1.

530: The controller 20 indicates, to a server 10, that the first data is requested.

In some embodiments, the controller 20 may further send, to the server 10, the first VXLAN ID used to identify the first VXLAN. In some embodiments, the controller 20 does not need to send the first VXLAN ID to the server.

535: The server 10 sends the first data to the aggregation device 30.

In some embodiments, the server 10 may send a correspondence between an identifier of the first data and the first VXLAN ID to the aggregation device 30, so that the controller 20 learns that the server 10 requests the controller 20 to send the first data by using the first VXLAN identified by the first VXLAN ID. Because the first tunnel of the first VXLAN is a part of the first VXLAN, the aggregation device 30 sends the first data to the data distribution point 40B through the first tunnel. When a plurality of tunnels of the first VXLAN are separately established between the aggregation device 30 and a plurality of data distribution points, the aggregation device 30 may send the first data to each data distribution point through each tunnel.

In some embodiments, the controller 20 does not need to send the first VXLAN ID to the server 10, and the server 10 does not need to indicate the aggregation device 30 to send the first data by using the first VXLAN. However, the controller 20 may indicate the aggregation device 30 to send the first data by using the first VXLAN.

540: The aggregation device 30 sends, to the data distribution point 40B based on the first VXLAN, a VXLAN packet that carries the first data and the first VXLAN ID.

When receiving the first data, the aggregation device 30 may determine, based on the correspondence between the first data and the first VXLAN, to send the first data by using the first VXLAN. The correspondence between the first data and the first VXLAN may be sent by the server 10, the controller 20, or another device to the aggregation device.

545: The data distribution point 40B determines the address of the terminal 50B1 based on the correspondence between the first VXLAN ID and the first data and the correspondence between the first data and the address of the terminal 50B1.

Because the VXLAN packet received by the data distribution point 40B includes both the first data and the first VXLAN ID, the VXLAN packet actually carries the correspondence between the first VXLAN ID and the first data. The determined terminal 50B1 herein is a receiver of the first data.

550: The data distribution point 40B sends the first data to the terminal 50B1 based on the address of the terminal 50B1.

555: The data distribution point 40B receives a request that is sent by a terminal 50B2 and that is used for obtaining the first data.

560: The data distribution point 40B generates a correspondence between the first VXLAN ID and an address of the terminal 50B2 based on the correspondence between the first VXLAN ID and the first data and the request sent by the terminal 50B2. The correspondence between the first VXLAN ID and the first data may be obtained by the data distribution point 40B based on 515b.

565: The data distribution point 40B sends the first data to the terminal 50B2 based on the correspondence between the first VXLAN ID and the address of the terminal 50B2.

In this case, because the data distribution point 40B stores not only the correspondence between the first VXLAN ID and the terminal 50B1, but also stores the correspondence between the first VXLAN ID and the address of the terminal 50B2. Therefore, the data distribution point 40B sends data received by using the first VXLAN to both the terminal 50B1 and the terminal 50B2.

FIG. 6 shows a data sending method 600 according to an embodiment of this application.

605: A data distribution point obtains a first correspondence between a first virtual extensible local area network identifier VXLAN ID and an address of a first terminal, where the first VXLAN ID identifies a first VLXAN.

The data distribution point may receive the first correspondence from another network device, or may generate the first correspondence. In some embodiments, the data distribution point may receive the first correspondence from a server or a controller. In some embodiments, the data distribution point may generate the first correspondence based on a correspondence that is between the first VXLAN ID and first data and that is received from another device and a request that is sent by the first terminal for the first data. For example, the data distribution point may receive a first request for requesting to obtain the first data, where the first request carries the address of the first terminal; store a correspondence between the address of the first terminal and the first data; send the first request to the server; receive the correspondence between the first VXLAN ID and the first data; and generate the first correspondence based on the correspondence between the first VXLAN ID and the first data and the correspondence between the address of the first terminal and the first data.

The terminal may be a smartphone, a personal computer, a notebook computer, or any device that can request the first data. The address of the first terminal may be an internet protocol (IP) address or a media access control (MAC) address of the first terminal, a number of the first terminal, and/or the like.

610: The data distribution point receives a first VXLAN packet based on a first tunnel of the first VXLAN, where the first VXLAN packet includes the first VXLAN ID and the first data.

The first VXLAN may have one or more tunnels, and each tunnel may be identified by the first VXLAN ID.

615: The data distribution point determines the address of the first terminal based on the first VXLAN ID carried in the first VXLAN packet and the first correspondence.

The first VXLAN packet carries the first VXLAN ID and the first data, that is, actually carries the correspondence between the first VXLAN ID and the first data. Because the data distribution point stores the correspondence between the first VXLAN ID and the address of the first terminal, the data distribution point may determine the correspondence between the first data and the address of the first terminal based on the two correspondences. In other words, the data distribution point may determine that the first data needs to be sent to the first terminal.

620: The data distribution point sends the first data to the first terminal based on the address of the first terminal.

The data distribution point may send the first data to the first terminal by using a plurality of methods. For example, the data distribution point may send a unicast IP packet that carries the first data to the first terminal; or the data distribution point may send a unicast VXLAN packet that carries the first data to the first terminal.

According to the foregoing method, a multicast-like function can be implemented when no complex multicast technology is deployed, thereby reducing network operation and management costs.

FIG. 7A and FIG. 7B show a data sending method 700 according to an embodiment of this application.

705: A data distribution point obtains a first correspondence between a first virtual extensible local area network identifier VXLAN ID and an address of a first terminal, where the first VXLAN ID identifies a first VLXAN.

710: The data distribution point receives a first VXLAN packet based on a first tunnel of the first VXLAN, where the first VXLAN packet includes the first VXLAN ID and first data.

In some embodiments, before 710, the data distribution point may further receive VXLAN configuration information used to establish the first tunnel of the first VXLAN, and establish the first tunnel of the first VXLAN with an aggregation device based on the VXLAN configuration information.

715: The data distribution point determines the address of the first terminal based on the first VXLAN ID carried in the first VXLAN packet and the first correspondence.

720: The data distribution point sends the first data to the first terminal based on the address of the first terminal.

In some embodiments, the aggregation device is the aggregation device 30 in FIG. 2A, the data distribution point is the data distribution point 40B in FIG. 2A, the first terminal is the terminal 50B1 in FIG. 2A, and the first tunnel of the first VXLAN is the VXLAN tunnel 70B in FIG. 2A. The aggregation device 30 sends the first data to the data distribution point 40B through the VXLAN tunnel 70B, and then the data distribution point 40B sends the first data to the terminal 50B1.

725: The data distribution point obtains a second correspondence between the first VXLAN ID and an address of a second terminal.

730: The data distribution point determines the address of the second terminal based on the first VXLAN ID carried in the first VXLAN packet and the second correspondence.

735: The data distribution point sends the first data to the second terminal based on the address of the second terminal.

In some embodiments, the second terminal is the terminal 50B2 in FIG. 2A. The data distribution point 40B sends the first data obtained based on 715 to the terminal 50B2. In this way, both the terminals 50B1 and 50B2 receive the first data.

740: The data distribution point obtains a third correspondence between a second VXLAN ID and an address of a third terminal, where the second VXLAN ID identifies a second VLXAN.

745: The data distribution point receives a second VXLAN packet based on a first tunnel of the second VXLAN, where the second VXLAN packet includes the second VXLAN ID and second data. The first data and the second data belong to two different data sources.

750: The data distribution point determines the address of the third terminal based on the second VXLAN ID carried in the second VXLAN packet and the second correspondence.

755: The data distribution point sends the second data to the third terminal based on the address of the third terminal.

In some embodiments, the third terminal and the first terminal are a same terminal or different terminals. When the third terminal is the terminal 50B1, the terminal 50B1 may receive both the first data and the second data.

Based on the foregoing operations, different data may be sent in a network.

In some embodiments, a terminal that requests to obtain the second data and the first terminal are in different networks, and correspond to different data distribution points. In this case, the tunnel of the second VXLAN may be established between an aggregation node and the data distribution point that corresponds to the terminal that requests to obtain the second data, and the second data is sent through the tunnel of the second VXLAN to the terminal that requests to obtain the second data. A method for establishing the tunnel of the second VXLAN and sending the second data is the same as the method in 740 to 755, except that the methods are implemented on different data distribution points.

725 to 735 and 740 to 755 are used to transmit different data, are two independent processes, and may be deployed independently or simultaneously.

It can be learned from the foregoing content that, in this embodiment of this application, data may be sent to a plurality of terminals in the network based on a VXLAN technology, and a multicast-like capability is implemented when no complex multicast protocol is deployed.

FIG. 8 shows an information processing method 800 according to an embodiment of this application.

805: A first network device obtains a correspondence between a first VXLAN ID and information related to first data, where the first VXLAN ID identifies a first VLXAN.

810: The first network device sends the correspondence and an identifier of a first data distribution point to a second network device.

The information related to the first data may have a plurality of meanings. In some embodiments, the information related to the first data includes an identifier of the first data. In some embodiments, the information related to the first data includes an address of a terminal that requests to obtain the first data. In some embodiments, the information related to the first data includes an identifier of the first data and an address of a terminal that requests to obtain the first data.

The first network device may obtain a correspondence between the first VXLAN ID and the information related to the first data in a plurality of manners.

In some embodiments, before obtaining the correspondence between the first VXLAN ID and the information related to the first data, the first network device receives a first request for obtaining the first data, where the first request carries an address of a first terminal. After obtaining the first request, the first network device generates the correspondence based on the first request, where the correspondence includes a correspondence between the first VXLAN ID and the address of the first terminal. When the first network device is a server, the second network device may be a controller. When the first network device is a controller, the second network device may be a data distribution point. In this case, the data distribution point may directly send the first data to the first terminal based on the received correspondence between the first VXLAN ID and the address of the first terminal.

In some embodiments, before obtaining the correspondence between the first VXLAN ID and the information related to the first data, the first network device receives a first request for obtaining the first data, where the first request carries the identifier of the first data. After obtaining the first request, the first network device generates the correspondence based on the first request, where the correspondence includes a correspondence between the first VXLAN ID and the identifier of the first data. When the first network device is a server, the second network device may be a controller. When the first network device is a controller, the second network device may be a data distribution point. After the correspondence between the first VXLAN ID and the identifier of the first data is sent to the data distribution point, the data distribution point generates a correspondence between the first VXLAN ID and an address of a first terminal based on the received correspondence, and sends the first data to the first terminal based on the generated correspondence.

In some embodiments, the first network device receives the correspondence between the first VXLAN ID and the information related to the first data from a third network device. When the first network device is a controller, the second network device is the first data distribution point, and the third network device is a server. In other words, the correspondence may be received from the server, instead of being generated by the controller.

In some embodiments, the first network device further sends, to the aggregation device and the first data distribution point, VXLAN configuration information used to establish a first tunnel of the first VXLAN. In this way, the first tunnel used to send the first data to the data distribution point is established between the aggregation device and the first data distribution point.

FIG. 9 is a block diagram of a data distribution point 900 according to an embodiment of this application. As shown in FIG. 9, the data distribution point 900 includes a processor 920, a memory 940, and a transceiver 960.

The processor 920 may be one or more central processing units (central processing units, CPUs), one or more network processors (network processors, NPs), or a combination of a CPU and an NP. The processor may alternatively be one or more application-specific integrated circuits (application-specific integrated circuits, ASICs), one or more programmable logic devices (programmable logic devices, PLDs), or a combination thereof. The PLD may be a complex programmable logic device (complex programmable logic device, CPLD), a field-programmable gate array (field-programmable gate array, FPGA), generic array logic (generic array logic, GAL), or any combination thereof. The memory 940 may be one memory, or may include a plurality of memories. The memory 940 may include a volatile memory (volatile memory), for example, a random access memory (random-access memory, RAM). The memory may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory may alternatively include a combination of the foregoing types of memories. The memory 940 stores computer-readable instructions, and the computer-readable instructions include a plurality of software modules. After executing each software module, the processor 920 may perform a corresponding operation according to an indication of each software module. After executing the computer-readable instructions in the memory 940, the processor 920 may perform, according to an indication of the computer-readable instructions, some or all operations performed by the data distribution point in FIG. 1, FIG. 2a to FIG. 2c, FIG. 2A, and FIG. 3A to FIG. 7B. The transceiver 960 may be an ethernet network interface, or may be another type of network interface. FIG. 9 shows two transceivers 960. When one transceiver is connected to a network-side device, the transceiver may be considered as a network-side transceiver, and the other transceiver is a user-side transceiver.

The memory 940 includes a plurality of software modules that can be executed by the processor 920, and each software module includes some computer-readable instructions. In some embodiments, the software modules may be stored in different memories.

The processor 920 executes the software modules in the memory 940, to perform or enable the device 900 to perform some or all operations performed by the data distribution point in FIG. 1, FIG. 2a to FIG. 2c, FIG. 2A, and FIG. 3A to FIG. 7B. For example, by executing the computer-readable instructions in the software modules in the memory 940, the processor 920 can obtain a first correspondence between a first VXLAN ID and an address of a first terminal; receive, based on a first tunnel of a first VXLAN, a first VXLAN packet including the first VXLAN ID and first data; determine the address of the first terminal based on the first VXLAN ID carried in the first VXLAN packet and the first correspondence; and send the first data to the first terminal based on the address of the first terminal.

In some embodiments, a server, a controller, and an aggregation device also include the structure shown in FIG. 9. For example, the server, the controller, and the aggregation device each have a processor and a memory. However, a computer-readable program stored in each memory of different devices is different from a computer-readable program of the data distribution point 900. The memories of the server, the controller, and the aggregation device respectively store the computer-readable programs used to enable the processors of the server, the controller, and the aggregation device to perform some or all operations performed by the server, the controller, and the aggregation device in FIG. 1, FIG. 2a to FIG. 2c, FIG. 2A, and FIG. 3A to FIG. 8. For example, after reading a corresponding computer-readable program stored in a processor of a server or a controller that serves as a first network device, the processor of the server or the controller may obtain a correspondence between the first VXLAN ID and information related to the first data, and then send the correspondence and an identifier of a first data distribution point to a second network device.

FIG. 10 is a block diagram of a data distribution point 1000 according to an embodiment of this application. As shown in FIG. 10, the data distribution point 1000 includes an obtaining unit 1020, a receiving unit 1040, a determining unit 1060, and a sending unit 1080. In some embodiments, the obtaining unit 1020, the receiving unit 1040, the determining unit 1060, and the sending unit 1080 may be implemented based on some or all of a processor 920, a memory 940 that stores a computer-readable program, and a transceiver 960. In some embodiments, the data distribution point 1000 can implement, based on a plurality of modules included in the data distribution point 1000, some or all operations performed by the data distribution point in FIG. 1, FIG. 2a to FIG. 2c, FIG. 2A, and FIG. 3A to FIG. 9.

In some embodiments, the obtaining unit 1020 is configured to obtain a first correspondence between a first virtual extensible local area network identifier VXLAN ID and an address of a first terminal, where the first VXLAN ID identifies a first VLXAN. The receiving unit 1040 is configured to receive a first VXLAN packet based on a first tunnel of the first VXLAN, where the first VXLAN packet includes the first VXLAN ID and first data. The determining unit 1060 is configured to determine the address of the first terminal based on the first VXLAN ID carried in the first VXLAN packet and the first correspondence. The sending unit 1060 is configured to send the first data to the first terminal based on the address of the first terminal. In some embodiments, the obtaining unit 1020 and the receiving unit 1040 are a same unit. The data distribution point 1000 may send, based on a correspondence between a VXLAN and a terminal that requests data, the data that is from the VXLAN to the terminal that requests the data, to implement a multicast-like function when no multicast protocol is deployed or a small quantity of multicast protocols are deployed.

In some embodiments, some or all of the plurality of units may further perform other operations. For example, the obtaining unit 1020 is further configured to obtain a second correspondence between the first VXLAN ID and an address of a second terminal. The determining unit 1060 is further configured to determine the address of the second terminal based on the first VXLAN ID carried in the first VXLAN packet and the second correspondence. The sending unit 1060 sends the first data to the second terminal based on the address of the second terminal. In this way, in addition to sending the data to the first terminal, the data distribution point 1000 may further send the data to the second terminal.

In some embodiments, the obtaining unit 1020 is further configured to obtain a third correspondence between a second VXLAN ID and an address of a third terminal, where the second VXLAN ID identifies a second VLXAN. The receiving unit 1040 is further configured to receive a second VXLAN packet based on a first tunnel of the second VXLAN, where the second VXLAN packet includes the second VXLAN ID and second data. The determining unit 1060 is further configured to determine the address of the third terminal based on the second VXLAN ID carried in the second VXLAN packet and the second correspondence. The sending unit 1060 is further configured to send the second data to the third terminal based on the address of the third terminal, where the first data and the second data belong to two different data sources, and the third terminal and the first terminal are a same terminal or different terminals. In this way, the data distribution point 1000 may send both the first data and the second data to the terminal, to meet requirements of the terminal for different data.

The obtaining unit 1020 may obtain the first correspondence in different manners. In some embodiments, the obtaining unit 1020 receives, through the receiving unit 1040, the first correspondence from another network device, for example, a controller or a server. In some embodiments, the receiving unit 1040 receives a first request for requesting to obtain the first data, where the first request carries the address of the first terminal; stores a correspondence between the address of the first terminal and the first data; and receives a correspondence between the first VXLAN ID and the first data. The obtaining unit 1020 generates the first correspondence based on the correspondence between the first VXLAN ID and the first data and the correspondence between the address of the first terminal and the first data.

In some embodiments, the data distribution point 1000 establishes, based on the receiving unit 1040 and an establishment unit, the first tunnel of the first VXLAN used to receive the first data. In an establishment process, the receiving unit 1040 receives VXLAN configuration information used to establish the first tunnel of the first VXLAN. The establishment unit establishes the first tunnel of the first VXLAN with an aggregation device based on the VXLAN configuration information.

In some embodiments, the address of the first terminal is an internet protocol IP address of the first terminal. In some embodiments, the sending unit 1060 is configured to: send a unicast IP packet that carries the first data to the first terminal; or send a unicast VXLAN packet that carries the first data to the first terminal. In this way, the data distribution point 1000 may send the data to the terminal in a plurality of manners. This increases an application scenario of this embodiment.

In some embodiments, the units may be independent hardware units. In some embodiments, the units may be virtual units. When the units are virtual units, the units may be implemented by the processor 940 by executing software modules that are stored in the memory 920 and correspond to the units.

FIG. 11 is a schematic diagram of a first network device 1100 according to an embodiment of this application. As shown in FIG. 11, the first network device 1100 includes an obtaining unit 1120 and a sending unit 1140. In some embodiments, that the first network device 1100 includes an obtaining unit 1120 and a sending unit 1140 may be implemented based on some or all of a processor 920, a memory 940 that stores a computer-readable program, and a transceiver 960.

In some embodiments, the obtaining unit 1120 is configured to obtain a correspondence between a first virtual extensible local area network identifier VXLAN ID and information related to first data, where the first VXLAN ID identifies a first VLXAN. The sending unit 1140 is configured to send the correspondence and an identifier of a first data distribution point to a second network device. The information related to the first data may have a plurality of meanings. In some embodiments, the information related to the first data may include an identifier of the first data, or may include an address of a terminal that requests to obtain the first data, or may include both an identifier of the first data and an address of a terminal that requests to obtain the first data. The obtaining unit 1120 and the sending unit 1140 may enable a data distribution point to directly or indirectly obtain a correspondence between the first VXLAN ID and the terminal that requests to obtain the first data, to help the data distribution point send, to the terminal, the first data received by using the first VXLAN. Therefore, a new data transmission mechanism is implemented.

In some embodiments, the first network device further includes a receiving unit 1160. The receiving unit 1160 is configured to receive a first request for obtaining the first data, and the first request carries an address of a first terminal. In some embodiments, the receiving unit 1160 may be implemented based on some or all of a processor 920, a memory 940 that stores a computer-readable program, and a transceiver 960.

The obtaining unit 1120 may obtain the correspondence in different manners. In some embodiments, the obtaining unit 1120 is configured to generate the correspondence based on the first request, where the correspondence includes a correspondence between the first VXLAN ID and the address of the first terminal. In some embodiments, the obtaining unit 1120 is configured to receive the correspondence from a third network device.

The first network device and the second network device may be different types of devices. In some embodiments, the first network device is a server, and the second network device is a controller. In some embodiments, the first network device is a controller, and the second network device is a data distribution point. In some embodiments, the first network device is a controller, the second network device is the first data distribution point, and the third network device is a server.

The obtaining unit 1120 may obtain the correspondence between the first VXLAN ID and the information related to the first data in a plurality of manners.

In some embodiments, before the obtaining unit 1120 obtains the correspondence between the first VXLAN ID and the information related to the first data, the receiving unit 1160 receives a first request for obtaining the first data, where the first request carries an address of a first terminal. After obtaining the first request, the obtaining unit 1120 generates the correspondence based on the first request, where the correspondence includes a correspondence between the first VXLAN ID and the address of the first terminal. When the first network device is a server, the second network device may be a controller. When the first network device is a controller, the second network device may be a data distribution point. In this case, the data distribution point may directly send the first data to the first terminal based on the received correspondence between the first VXLAN ID and the address of the first terminal.

In some embodiments, before the obtaining unit 1120 obtains the correspondence between the first VXLAN ID and the information related to the first data, the receiving unit 1160 receives a first request for obtaining the first data, where the first request carries the identifier of the first data. After obtaining the first request, the obtaining unit 1120 generates the correspondence based on the first request, where the correspondence includes a correspondence between the first VXLAN ID and the identifier of the first data. When the first network device is a server, the second network device may be a controller. When the first network device is a controller, the second network device may be a data distribution point. After the correspondence between the first VXLAN ID and the identifier of the first data is sent to the data distribution point, the data distribution point generates a correspondence between the first VXLAN ID and an address of a first terminal based on the received correspondence, and sends the first data to the first terminal based on the generated correspondence.

In some embodiments, the obtaining unit 1120 receives, through the receiving unit 1160, the correspondence between the first VXLAN ID and the information related to the first data from a third network device. When the first network device is a controller, the second network device is the first data distribution point, and the third network device is a server. In other words, the correspondence may be received from the server, instead of being generated by the controller.

In some embodiments, the sending unit 1140 is further configured to send, to an aggregation device and the first data distribution point, VXLAN configuration information used to establish a first tunnel of the first VXLAN. In this way, the first tunnel of the first VXLAN can be established between the aggregation device and the first data distribution point. In some embodiments, the first network device 1000 does not need to send the VXLAN configuration information, and the aggregation device and the first data distribution point may receive the VXLAN configuration information from another device. In some embodiments, the first network device 1100 can implement, based on a plurality of modules included in the first network device 1100, some or all operations performed by the server or the controller in FIG. 1, FIG. 2a to FIG. 2c, FIG. 2A, and FIG. 3A to FIG. 9.

In some embodiments, the units may be independent hardware units. In some embodiments, the units may be virtual units. When the units are virtual units, the units may be implemented by the processor 940 by executing software modules that are stored in the memory 920 and correspond to the units. An embodiment of this application discloses a computer-readable medium that stores computer-readable instructions. The computer-readable medium may include a plurality of types of media, such as a read-only memory (ROM), a hard disk, an optical disk, and a flash memory. When computer-readable instructions in a computer-readable storage medium corresponding to a network device are executed by an execution device, the execution device can perform all operations that can be performed by the network device. This embodiment includes computer-readable storage media corresponding to the devices such as a server, a controller, an aggregation device, and a data distribution point in FIG. 1.

In this application, "A and/or B" refers to A, B, or A and B; and "including A and/or B" means including A, including B, or including A and B.

The foregoing descriptions are merely preferable specific implementations of the present invention, but are not intended to limit the protection scope of the present invention. Any variation or replacement readily figured out by a person skilled in the art within the technical scope disclosed in the present invention shall fall within the protection scope of the present invention.

## Claims

1. A data transmission method, comprising:
obtaining, by a data distribution point, a first correspondence between a first virtual extensible local area network identifier VXLAN ID and an address of a first terminal, wherein the first VXLAN ID identifies a first VLXAN;
receiving, by the data distribution point, a first VXLAN packet based on a tunnel of the first VXLAN, wherein the first VXLAN packet comprises the first VXLAN ID and first data;
determining, by the data distribution point, the address of the first terminal based on the first VXLAN ID carried in the first VXLAN packet and the first correspondence; and
sending, by the data distribution point, the first data to the first terminal based on the address of the first terminal.

2. The method according to claim 1, comprising:
obtaining, by the data distribution point, a second correspondence between the first VXLAN ID and an address of a second terminal;
determining, by the data distribution point, the address of the second terminal based on the first VXLAN ID carried in the first VXLAN packet and the second correspondence; and
sending, by the data distribution point, the first data to the second terminal based on the address of the second terminal.

3. The method according to claim 1 or 2, wherein the method further comprises:
obtaining, by the data distribution point, a third correspondence between a second VXLAN ID and an address of a third terminal, wherein the second VXLAN ID identifies a second VLXAN;
receiving, by the data distribution point, a second VXLAN packet based on a tunnel of the second VXLAN, wherein the second VXLAN packet comprises the second VXLAN ID and second data;
determining, by the data distribution point, the address of the third terminal based on the second VXLAN ID carried in the second VXLAN packet and the second correspondence; and
sending, by the data distribution point, the second data to the third terminal based on the address of the third terminal, wherein the first data and the second data belong to two different data sources, and the third terminal and the first terminal are a same terminal or different terminals.

4. The method according to any one of claims 1 to 3, wherein the obtaining, by a data distribution point, a first correspondence comprises:
receiving, by the data distribution point, a request for requesting to obtain the first data, wherein the request carries the address of the first terminal;
storing, by the data distribution point, a correspondence between the address of the first terminal and the first data;
receiving, by the data distribution point, a correspondence between the first VXLAN ID and the first data; and
generating, by the data distribution point, the first correspondence based on the correspondence between the first VXLAN ID and the first data and the correspondence between the address of the first terminal and the first data.

5. The method according to any one of claims 1 to 3, wherein the data distribution point receives the first correspondence from a controller or a server.

6. The method according to any one of claims 1 to 5, wherein the method further comprises:
receiving, by the data distribution point, VXLAN configuration information used to establish the tunnel of the first VXLAN; and
establishing, by the data distribution point, the tunnel of the first VXLAN with an aggregation device based on the VXLAN configuration information.

7. The method according to any one of claims 1 to 6, wherein the address of the first terminal is an internet protocol IP address or a media access control MAC address of the first terminal.

8. The method according to any one of claims 1 to 7, wherein the sending, by the data distribution point, the first data to the first terminal based on the address of the first terminal comprises:
sending, by the data distribution point, a unicast IP packet that carries the first data to the first terminal; or
sending, by the data distribution point, a unicast VXLAN packet that carries the first data to the first terminal.

9. A network configuration method, comprising:
obtaining, by a first network device, a correspondence between a first virtual extensible local area network identifier VXLAN ID and information related to first data, wherein the first VXLAN ID identifies a first VLXAN; and
sending, by the first network device, the correspondence to a second network device.

10. The method according to claim 9, wherein the information related to the first data comprises an identifier of the first data and/or an address of a terminal that requests to obtain the first data.

11. The method according to claim 9 or 10, wherein
the method further comprises: receiving, by the first network device, a request for obtaining the first data, and the first request carries an address of a first terminal; and
the obtaining, by a first network device, a correspondence comprises: generating, by the first network device, the correspondence based on the request, wherein the correspondence comprises a correspondence between the first VXLAN ID and the address of the first terminal.

12. The method according to claim 11, wherein
the first network device is a server, and the second network device is a controller; or
the first network device is a controller, and the second network device is a data distribution point.

13. The method according to claim 9 or 10, wherein the obtaining, by a first network device, a correspondence comprises: receiving the correspondence from a third network device.

14. The method according to claim 13, wherein the first network device is a controller, the second network device is the first data distribution point, and the third network device is a server.

15. The method according to any one of claims 9 to 14, wherein the method further comprises:
sending, by the first network device to an aggregation device and the data distribution point, VXLAN configuration information used to establish a tunnel of the first VXLAN.

16. The method according to any one of claims 9 to 15, wherein the method further comprises: sending, by the first network device, an identifier of the data distribution point to the second network device.

17. A data distribution point, comprising:
an obtaining unit, configured to obtain a first correspondence between a first virtual extensible local area network identifier VXLAN ID and an address of a first terminal, wherein the first VXLAN ID identifies a first VLXAN;
a receiving unit, configured to receive a first VXLAN packet based on a tunnel of the first VXLAN, wherein the first VXLAN packet comprises the first VXLAN ID and first data;
a determining unit, configured to determine the address of the first terminal based on the first VXLAN ID carried in the first VXLAN packet and the first correspondence; and
a sending unit, configured to send the first data to the first terminal based on the address of the first terminal.

18. The data distribution point according to claim 17, wherein
the obtaining unit is further configured to obtain a second correspondence between the first VXLAN ID and an address of a second terminal;
the determining unit is further configured to determine the address of the second terminal based on the first VXLAN ID carried in the first VXLAN packet and the second correspondence; and
the data distribution point sends the first data to the second terminal based on the address of the second terminal.

19. The data distribution point according to claim 17 or 18, wherein
the obtaining unit is further configured to obtain a third correspondence between a second VXLAN ID and an address of a third terminal, wherein the second VXLAN ID identifies a second VLXAN;
the receiving unit is further configured to receive a second VXLAN packet based on a tunnel of the second VXLAN, wherein the second VXLAN packet comprises the second VXLAN ID and second data;
the determining unit is further configured to determine the address of the third terminal based on the second VXLAN ID carried in the second VXLAN packet and the second correspondence; and
the sending unit is further configured to send the second data to the third terminal based on the address of the third terminal, wherein the first data and the second data belong to two different data sources, and the third terminal and the first terminal are a same terminal or different terminals.

20. The data distribution point according to any one of claims 17 to 19, wherein
the receiving unit is configured to: receive a request for requesting to obtain the first data, wherein the request carries the address of the first terminal; store a correspondence between the address of the first terminal and the first data; and receive a correspondence between the first VXLAN ID and the first data; and
the obtaining unit is configured to generate the first correspondence based on the correspondence between the first VXLAN ID and the first data and the correspondence between the address of the first terminal and the first data.

21. The data distribution point according to any one of claims 17 to 19, wherein the receiving unit receives the first correspondence from a controller or a server.

22. The data distribution point according to any one of claims 17 to 21, wherein
the receiving unit is configured to receive VXLAN configuration information used to establish the tunnel of the first VXLAN; and
the data distribution point further comprises an establishment unit, and the establishment unit is configured to establish the tunnel of the first VXLAN with an aggregation device based on the VXLAN configuration information.

23. The data distribution point according to any one of claims 17 to 22, wherein the address of the first terminal is an internet protocol IP address of the first terminal or a media access control MAC address of the first terminal.

24. The data distribution point according to any one of claims 17 to 23, wherein the sending unit is configured to:
send a unicast IP packet that carries the first data to the first terminal; or
send a unicast VXLAN packet that carries the first data to the first terminal.

25. A first network device, comprising:
an obtaining unit, configured to obtain a correspondence between a first virtual extensible local area network identifier VXLAN ID and information related to first data, wherein the first VXLAN ID identifies a first VLXAN; and
a sending unit, configured to send the correspondence to a second network device.

26. The first network device according to claim 25, wherein the information related to the data comprises an identifier of the first data and/or an address of a terminal that requests to obtain the first data.

27. The first network device according to claim 25 or 26, wherein
the first network device comprises a receiving unit, wherein the receiving unit is configured to receive a request for obtaining the first data, and the request carries an address of a first terminal; and
the obtaining unit is configured to generate the correspondence based on the request, wherein the correspondence comprises a correspondence between the first VXLAN ID and the address of the first terminal.

28. The first network device according to claim 27, wherein
the first network device is a server, and the second network device is a controller; or
the first network device is a controller, and the second network device is a data distribution point.

29. The first network device according to claim 25 or 26, wherein the obtaining unit is configured to receive the correspondence from a third network device.

30. The first network device according to claim 29, wherein the first network device is a controller, the second network device is a data distribution point, and the third network device is a server.

31. The first network device according to any one of claims 25 to 30, wherein the sending unit is configured to send, to an aggregation device and the data distribution point, VXLAN configuration information used to establish a tunnel of the first VXLAN.

32. The first network device according to any one of claims 25 to 31, wherein the sending unit is further configured to send an identifier of the data distribution point to the second network device.

33. A network system, comprising the data distribution point according to any one of claims 17 to 24 and the first network device according to any one of claims 25 to 32.
